# EUROPEAN PATENT APPLICATION

(11) **EP 4 765 941 A1**
(43) Date of publication of application: **24.06.2026**
(21) Application number: 24884060.5
(22) Date of filing: 26.07.2024
(51) Int. Cl.: H04W 28/12

(54) **COMMUNICATION METHOD, SYSTEM AND RELATED DEVICE**

(30) Priority: 02.11.2023 CN 202311456218
(71) Applicant: Honor Device Co., Ltd., Shenzhen, Guangdong 518040 (CN)
(72) Inventor: ZHANG, Mingzhu, Shenzhen, Guangdong 518040 (CN); SHAN, Baokun, Shenzhen, Guangdong 518040 (CN)
(74) Representative: Gill Jennings & Every LLP
(86) International application number: PCT/CN2024/107744
(87) International publication number: WO 2025/092053

(57) **Abstract**

Embodiments of this application provide a communication method and system and a related device. The method includes: obtaining, by a terminal device, first information and sending a delay status report, where the first information is used to instruct to activate the delay status report; or obtaining, by the terminal device, second information, where the second information is used to instruct to deactivate the delay status report. In this way, the terminal device activates the delay status report, so that the terminal device can allocate a resource in time to transmit a remaining non-transmitted PDU in the PDU set, to avoid discarding of the entire PDU set due to packet loss, thereby improving quality of service running on the terminal device and user experience of the service. Alternatively, the terminal device deactivates the delay status report, to avoid frequently sending the delay status report to an access network element in a network congestion case, to avoid network congestion aggravation, thereby improving quality of service run on the terminal device and user experience of the service.

## Description

This application claims priority to Chinese Patent Application No. 202311456218.3, filed with the China National Intellectual Property Administration on November 02, 2023 and entitled "COMMUNICATION METHOD AND SYSTEM AND RELATED DEVICE", which is incorporated herein by reference in its entirety.

### TECHNICAL FIELD

This application relates to the field of communications technologies, and in particular, to a communication method and system and a related device.

### BACKGROUND

Extended reality (Extended Reality, XR) refers to integrating virtual content and real scenes to create a human-computer interactive virtual environment in a plurality of technical means through hardware devices, and combines a plurality of technologies such as augmented reality (augmented reality, AR), virtual reality (virtual reality, VR), and mixed reality (mixed reality, MR).

In a service running process, for example, an XR service, a corresponding multimedia stream, for example, a video stream, is transmitted between a terminal device and an access network element. Usually, the terminal device and the access network element may communicate with each other based on a discarding mechanism of a protocol data unit (protocol data unit, PDU) set. Specifically, when the terminal device receives a PDU set delivered by the access network element, if at least one PDU in the PDU set cannot be successfully transmitted to the terminal device, the terminal device discards the entire PDU set.

In an actual application scenario, in a running process of an XR service on the terminal device, packet loss often occurs in a PDU set transmitted between the terminal device and the access network element. Consequently, the terminal device or the access network element discards the entire PDU. This affects quality of the service run on the terminal device and affects user experience of the service.

### SUMMARY

This application provides a communication method and system and a related device, to improve quality of a service run on a terminal device and user experience of the service.

To achieve the foregoing objective, this application provides the following technical solutions.

According to a first aspect, this application provides a communication method, applied to a terminal device. The method includes: obtaining first information and sending a delay status report, where the first information is used to instruct to activate the delay status report; or obtaining second information, wherein the second information is used to instruct to deactivate the delay status report.

In a possible implementation, the second information is further used to instruct to activate discarding based on protocol data unit set importance.

In a possible implementation, the first information is further used to instruct to deactivate discarding based on protocol data unit set importance.

In a possible implementation, the method specifically includes: obtaining a first message of the first type, where the first message includes the first information or the second information, the message of the first type includes a first field and a second field, the first field is used to indicate a status of discarding based on protocol data unit set importance, the status includes an activated state or a deactivated state, the second field is used to indicate a status of a delay status report, and the status of the delay status report includes an activated state or a deactivated state.

In a possible implementation, the first message includes the second information, a value of the first field in the first message is a first value, the first value of the first field is used to instruct to activate discarding based on protocol data unit set importance, a value of the second field in the first message is a second value, and the second value of the second field is used to instruct to deactivate the delay status report.

In a possible implementation, the first message includes the first information, a value of the first field in the first message is a third value, the third value of the first field is used to instruct to deactivate discarding based on protocol data unit set importance, a value of the second field in the second message is a fourth value, and the fourth value of the second field is used to instruct to activate the delay status report.

In a possible implementation, the obtaining second information includes: obtaining a second message, where the second message includes a first logical channel identifier, and the first logical channel identifier is used to instruct to activate discarding based on protocol data unit set importance and instruct to deactivate the delay status report.

In a possible implementation, the obtaining first information includes: obtaining a third message, where the third message includes a second logical channel identifier, and the second logical channel identifier is used to instruct to deactivate discarding based on protocol data unit set importance and instruct to activate the delay status report.

In a possible implementation, the second information is further used to instruct to deactivate discarding based on protocol data unit set importance.

In a possible implementation, the first information is further used to instruct to activate discarding based on protocol data unit set importance.

In a possible implementation, the method specifically includes: obtaining a fourth message of the first type, where the fourth message includes the first information or the second information, the message of the first type includes a first field and a second field, the first field is used to indicate a status of discarding based on protocol data unit set importance, the status includes an activated state or a deactivated state, the second field is used to indicate a status of a delay status report, and the status of the delay status report includes an activated state or a deactivated state.

In a possible implementation, the fourth message includes the first information, a value of the first field in the fourth message is a fifth value, the fifth value of the first field is used to instruct to activate discarding based on protocol data unit set importance, a value of the second field in the fourth message is a sixth value, and the sixth value of the second field is used to instruct to activate the delay status report.

In a possible implementation, the fourth message includes the second information, a value of the first field in the fourth message is a seventh value, the seventh value of the first field is used to instruct to deactivate discarding based on protocol data unit set importance, a value of the second field in the fourth message is an eighth value, and the eighth value of the second field is used to instruct to deactivate the delay status report.

In a possible implementation, the obtaining first information includes: obtaining a fifth message, where the fifth message includes a third logical channel identifier, and the third logical channel identifier is used to instruct to activate discarding based on protocol data unit set importance and instruct to activate the delay status report.

In a possible implementation, the obtaining second information includes: obtaining a sixth message, where the sixth message includes a fourth logical channel identifier, and the fourth logical channel identifier is used to instruct to deactivate discarding based on protocol data unit set importance and instruct to deactivate the delay status report.

According to a second aspect, this application provides a communication method, applied to an access network element. The method includes: sending first information and obtaining a delay status report, where the delay status report includes delay related information, and the first information is used to instruct to activate the delay status report; or sending second information, where the second information is used to instruct to deactivate the delay status report.

In a possible implementation, the second information is further used to instruct to activate discarding based on protocol data unit set importance.

In a possible implementation, the first information is further used to instruct to deactivate discarding based on protocol data unit set importance.

In a possible implementation, the method specifically includes: sending a first message of the first type, where the first message includes the first information or the second information, the message of the first type includes a first field and a second field, the first field is used to indicate a status of discarding based on protocol data unit set importance, the status includes an activated state or a deactivated state, the second field is used to indicate a status of a delay status report, and the status of the delay status report includes an activated state or a deactivated state.

In a possible implementation, the first message includes the second information, a value of the first field in the first message is a first value, the first value of the first field is used to instruct to activate discarding based on protocol data unit set importance, a value of the second field in the first message is a second value, and the second value of the second field is used to instruct to deactivate the delay status report.

In a possible implementation, the first message includes the first information, a value of the first field in the first message is a third value, the third value of the first field is used to instruct to deactivate discarding based on protocol data unit set importance, a value of the second field in the second message is a fourth value, and the fourth value of the second field is used to instruct to activate the delay status report.

In a possible implementation, the sending second information includes: sending a second message, where the second message includes a first logical channel identifier, and the first logical channel identifier is used to instruct to activate discarding based on protocol data unit set importance and instruct to deactivate the delay status report.

In a possible implementation, the sending first information includes: obtaining a third message, where the third message includes a second logical channel identifier, and the second logical channel identifier is used to instruct to deactivate discarding based on protocol data unit set importance and instruct to activate the delay status report.

The second information is further used to instruct to deactivate discarding based on protocol data unit set importance. In a possible implementation,

In a possible implementation, the first information is further used to instruct to activate discarding based on protocol data unit set importance.

In a possible implementation, the method specifically includes: sending a fourth message of the first type, where the fourth message includes the first information or the second information, the message of the first type includes a first field and a second field, the first field is used to indicate a status of discarding based on protocol data unit set importance, the status includes an activated state or a deactivated state, the second field is used to indicate a status of a delay status report, and the status of the delay status report includes an activated state or a deactivated state.

In a possible implementation, the fourth message includes the first information, a value of the first field in the fourth message is a fifth value, the fifth value of the first field is used to instruct to activate discarding based on protocol data unit set importance, a value of the second field in the fourth message is a sixth value, and the sixth value of the second field is used to instruct to activate the delay status report.

In a possible implementation, the fourth message includes the second information, a value of the first field in the fourth message is a seventh value, the seventh value of the first field is used to instruct to deactivate discarding based on protocol data unit set importance, a value of the second field in the fourth message is an eighth value, and the eighth value of the second field is used to instruct to deactivate the delay status report.

In a possible implementation, the sending first information includes: sending a fifth message, where the fifth message includes a third logical channel identifier, and the third logical channel identifier is used to instruct to activate discarding based on protocol data unit set importance and instruct to activate the delay status report.

In a possible implementation, the sending second information includes: obtaining a sixth message, where the sixth message includes a fourth logical channel identifier, and the fourth logical channel identifier is used to instruct to deactivate discarding based on protocol data unit set importance and instruct to deactivate the delay status report.

According to a third aspect, this application provides a communication method, applied to a terminal device. The method includes: obtaining first information, where the first information is used to indicate discarding based on protocol data unit set importance; and sending a total data volume corresponding to the protocol data unit set.

In a possible implementation, the method further includes: obtaining second information and sending a total data volume of a protocol data unit or a service data unit, where the second information is used to instruct to deactivate discarding based on protocol data unit set importance, and a remaining transmission duration corresponding to the protocol data unit is less than the threshold; or sending a total data volume of a protocol data unit or a service data unit when the first information is not obtained, where the remaining transmission duration corresponding to the protocol data unit is less than the threshold.

In a possible implementation, the obtaining first information includes: obtaining a first message, where the first message includes a first field, a value of the first field is a first value, and the first value of the first field is used to indicate discarding based on protocol data unit set importance; or obtaining a second message, where the second message includes a first field and a second field, a value of the first field is a first value, the first value of the first field is used to instruct to activate discarding based on protocol data unit set importance, a value of the second field is a second value, and the second value of the second field is used to instruct to send a total data volume corresponding to a protocol data unit set.

In a possible implementation, the obtaining first information includes: obtaining a third message, where the third message includes a logical channel identifier, and the logical channel identifier is used to instruct to activate discarding based on protocol data unit set importance for the protocol data unit set, and to send a total data volume corresponding to the protocol data unit set.

According to a fourth aspect, this application provides a communication method, applied to an access network element. The method includes: sending first information, where the first information is used to indicate discarding based on protocol data unit set importance; and obtaining a total data volume corresponding to the protocol data unit set.

In a possible implementation, the method further includes: sending second information and obtaining a total data volume of a protocol data unit or a service data unit, where the second information is used to instruct to deactivate discarding based on protocol data unit set importance, and a remaining transmission duration corresponding to the protocol data unit is less than the threshold; or sending a total data volume of a protocol data unit or a service data unit when the first information is not obtained, where the remaining transmission duration corresponding to the protocol data unit is less than the threshold.

In a possible implementation, the sending first information includes: sending a first message, where the first message includes a first field, a value of the first field is a first value, and the first value of the first field is used to indicate discarding based on protocol data unit set importance; or sending a second message, where the second message includes a first field and a second field, a value of the first field is a first value, the first value of the first field is used to instruct to activate discarding based on protocol data unit set importance, a value of the second field is a second value, and the second value of the second field is used to instruct to send a total data volume corresponding to a protocol data unit set.

In a possible implementation, the sending first information includes: sending a third message, where the third message includes a logical channel identifier, and the logical channel identifier is used to instruct to activate discarding based on protocol data unit set importance for the protocol data unit set, and to send a total data volume corresponding to the protocol data unit set.

According to a fifth aspect, this application provides a terminal device, including: an obtaining module, configured to obtain first information; and a sending module, configured to send a delay status report, where the first information is used to instruct to activate the delay status report; or an obtaining module, configured to obtain second information, where the second information is used to instruct to deactivate the delay status report.

In a possible implementation, the second information is further used to instruct to activate discarding based on protocol data unit set importance.

In a possible implementation, the first information is further used to instruct to deactivate discarding based on protocol data unit set importance.

In a possible implementation, the obtaining module is configured to: obtain a first message of the first type, where the first message includes the first information or the second information, the message of the first type includes a first field and a second field, the first field is used to indicate a status of discarding based on protocol data unit set importance, the status includes an activated state or a deactivated state, the second field is used to indicate a status of a delay status report, and the status of the delay status report includes an activated state or a deactivated state.

In a possible implementation, the first message includes the second information, a value of the first field in the first message is a first value, the first value of the first field is used to instruct to activate discarding based on protocol data unit set importance, a value of the second field in the first message is a second value, and the second value of the second field is used to instruct to deactivate the delay status report.

In a possible implementation, the first message includes the first information, a value of the first field in the first message is a third value, the third value of the first field is used to instruct to deactivate discarding based on protocol data unit set importance, a value of the second field in the second message is a fourth value, and the fourth value of the second field is used to instruct to activate the delay status report.

In a possible implementation, the obtaining module is configured to: obtain a second message, where the second message includes a first logical channel identifier, and the first logical channel identifier is used to instruct to activate discarding based on protocol data unit set importance and instruct to deactivate the delay status report.

In a possible implementation, the obtaining module is configured to: obtain a third message, where the third message includes a second logical channel identifier, and the second logical channel identifier is used to instruct to deactivate discarding based on protocol data unit set importance and instruct to activate the delay status report.

In a possible implementation, the second information is further used to instruct to deactivate discarding based on protocol data unit set importance.

In a possible implementation, the first information is further used to instruct to activate discarding based on protocol data unit set importance.

In a possible implementation, the obtaining module is configured to: obtain a fourth message of the first type, where the fourth message includes the first information or the second information, the message of the first type includes a first field and a second field, the first field is used to indicate a status of discarding based on protocol data unit set importance, the status includes an activated state or a deactivated state, the second field is used to indicate a status of a delay status report, and the status of the delay status report includes an activated state or a deactivated state.

In a possible implementation, the fourth message includes the first information, a value of the first field in the fourth message is a fifth value, the fifth value of the first field is used to instruct to activate discarding based on protocol data unit set importance, a value of the second field in the fourth message is a sixth value, and the sixth value of the second field is used to instruct to activate the delay status report.

In a possible implementation, the fourth message includes the second information, a value of the first field in the fourth message is a seventh value, the seventh value of the first field is used to instruct to deactivate discarding based on protocol data unit set importance, a value of the second field in the fourth message is an eighth value, and the eighth value of the second field is used to instruct to deactivate the delay status report.

In a possible implementation, the obtaining module is configured to: obtain a fifth message, where the fifth message includes a third logical channel identifier, and the third logical channel identifier is used to instruct to activate discarding based on protocol data unit set importance and instruct to activate the delay status report.

In a possible implementation, the obtaining module is configured to: obtain a sixth message, where the sixth message includes a fourth logical channel identifier, and the fourth logical channel identifier is used to instruct to deactivate discarding based on protocol data unit set importance and instruct to deactivate the delay status report.

According to a sixth aspect, this application further provides an access network element, including: a sending module, configured to send first information, where the first information is used to instruct to activate a delay status report; and an obtaining module, configured to obtain the delay status report, where the delay status report includes delay related information; or a sending module, configured to send second information, where the second information is used to instruct to deactivate the delay status report.

In a possible implementation, the second information is further used to instruct to activate discarding based on protocol data unit set importance.

In a possible implementation, the first information is further used to instruct to deactivate discarding based on protocol data unit set importance.

In a possible implementation, the sending module is configured to: send a first message of the first type, where the first message includes the first information or the second information, the message of the first type includes a first field and a second field, the first field is used to indicate a status of discarding based on protocol data unit set importance, the status includes an activated state or a deactivated state, the second field is used to indicate a status of a delay status report, and the status of the delay status report includes an activated state or a deactivated state.

In a possible implementation, the first message includes the second information, a value of the first field in the first message is a first value, the first value of the first field is used to instruct to activate discarding based on protocol data unit set importance, a value of the second field in the first message is a second value, and the second value of the second field is used to instruct to deactivate the delay status report.

In a possible implementation, the first message includes the first information, a value of the first field in the first message is a third value, the third value of the first field is used to instruct to deactivate discarding based on protocol data unit set importance, a value of the second field in the second message is a fourth value, and the fourth value of the second field is used to instruct to activate the delay status report.

In a possible implementation, the sending module is configured to: send a second message, where the second message includes a first logical channel identifier, and the first logical channel identifier is used to instruct to activate discarding based on protocol data unit set importance and instruct to deactivate the delay status report.

In a possible implementation, the sending module is configured to: obtain a third message, where the third message includes a second logical channel identifier, and the second logical channel identifier is used to instruct to deactivate discarding based on protocol data unit set importance and instruct to activate the delay status report.

In a possible implementation, the second information is further used to instruct to deactivate discarding based on protocol data unit set importance.

In a possible implementation, the first information is further used to instruct to activate discarding based on protocol data unit set importance.

In a possible implementation, the sending module is configured to: send a fourth message of the first type, where the fourth message includes the first information or the second information, the message of the first type includes a first field and a second field, the first field is used to indicate a status of discarding based on protocol data unit set importance, the status includes an activated state or a deactivated state, the second field is used to indicate a status of a delay status report, and the status of the delay status report includes an activated state or a deactivated state.

In a possible implementation, the fourth message includes the first information, a value of the first field in the fourth message is a fifth value, the fifth value of the first field is used to instruct to activate discarding based on protocol data unit set importance, a value of the second field in the fourth message is a sixth value, and the sixth value of the second field is used to instruct to activate the delay status report.

In a possible implementation, the fourth message includes the second information, a value of the first field in the fourth message is a seventh value, the seventh value of the first field is used to instruct to deactivate discarding based on protocol data unit set importance, a value of the second field in the fourth message is an eighth value, and the eighth value of the second field is used to instruct to deactivate the delay status report.

In a possible implementation, the sending module is configured to: send a fifth message, where the fifth message includes a third logical channel identifier, and the third logical channel identifier is used to instruct to activate discarding based on protocol data unit set importance and instruct to activate the delay status report.

In a possible implementation, the sending module is configured to: obtain a sixth message, where the sixth message includes a fourth logical channel identifier, and the fourth logical channel identifier is used to instruct to deactivate discarding based on protocol data unit set importance and instruct to deactivate the delay status report.

According to a seventh aspect, this application further provides a terminal device, including: an obtaining module, configured to obtain first information, where the first information is used to indicate discarding based on protocol data unit set importance; and a sending module, configured to send a total data volume corresponding to a protocol data unit set.

In a possible implementation, the obtaining module is further configured to obtain second information, and the sending module is further configured to send a total data volume of a protocol data unit or a service data unit, where the second information is used to instruct to deactivate discarding based on protocol data unit set importance, and a remaining transmission duration corresponding to the protocol data unit is less than the threshold; or the sending module is further configured to send a total data volume of a protocol data unit or a service data unit when the first information is not obtained, where the remaining transmission duration corresponding to the protocol data unit is less than the threshold.

In a possible implementation, the obtaining module is configured to obtain a first message, where the first message includes a first field, a value of the first field is a first value, and the first value of the first field is used to indicate discarding based on protocol data unit set importance; or the obtaining module is configured to obtain a second message, where the second message includes a first field and a second field, a value of the first field is a first value, the first value of the first field is used to instruct to activate discarding based on protocol data unit set importance, a value of the second field is a second value, and the second value of the second field is used to instruct to send a total data volume corresponding to a protocol data unit set.

In a possible implementation, the obtaining module is configured to obtain a third message, where the third message includes a logical channel identifier, and the logical channel identifier is used to instruct to activate discarding based on protocol data unit set importance for the protocol data unit set, and to send a total data volume corresponding to the protocol data unit set.

According to an eighth aspect, this application provides an access network element, including: a sending module, configured to send first information, where the first information is used to indicate discarding based on protocol data unit set importance; and an obtaining module, configured to obtain a total data volume corresponding to a protocol data unit set.

In a possible implementation, the sending module is further configured to send second information, and the obtaining module is further configured to obtain a total data volume of a protocol data unit or a service data unit, where the second information is used to instruct to deactivate discarding based on protocol data unit set importance, and a remaining transmission duration corresponding to the protocol data unit is less than the threshold; or the obtaining module is further configured to obtain a total data volume of a protocol data unit or a service data unit when the first information is not obtained, where the remaining transmission duration corresponding to the protocol data unit is less than the threshold.

In a possible implementation, the sending module is configured to send a first message, where the first message includes a first field, a value of the first field is a first value, and the first value of the first field is used to indicate discarding based on protocol data unit set importance; or the sending module is configured to send a second message, where the second message includes a first field and a second field, a value of the first field is a first value, the first value of the first field is used to instruct to activate discarding based on protocol data unit set importance, a value of the second field is a second value, and the second value of the second field is used to instruct to send a total data volume corresponding to a protocol data unit set.

In a possible implementation, the sending module is configured to send a third message, where the third message includes a logical channel identifier, and the logical channel identifier is used to instruct to activate discarding based on protocol data unit set importance for the protocol data unit set, and to send a total data volume corresponding to the protocol data unit set.

According to a ninth aspect, this application provides a terminal device, including a transceiver and a processor. The transceiver is configured to perform a receiving operation and a sending operation in the method according to the first aspect or any implementation of the first aspect, or perform a receiving operation and a sending operation in the method according to the third aspect or any implementation of the third aspect. The processor is configured to perform an operation other than the receiving operation and the sending operation in the method according to the first aspect or any implementation of the first aspect, or perform an operation other than the receiving operation and the sending operation in the method according to the third aspect or any implementation of the third aspect.

According to a tenth aspect, this application provides an access network element, including a transceiver and a processor. The transceiver is configured to perform a receiving operation and a sending operation in the method according to the second aspect or any implementation of the second aspect, or perform a receiving operation and a sending operation in the method according to the fourth aspect or any implementation of the fourth aspect. The processor is configured to perform an operation other than the receiving operation and the sending operation in the method according to the second aspect or any implementation of the second aspect, or perform an operation other than the receiving operation and the sending operation in the method according to the fourth aspect or any implementation of the fourth aspect.

According to an eleventh aspect, this application provides a communication system, including a terminal device and an access network element. The terminal device is configured to perform the method according to the first aspect or any implementation of the first aspect or the method according to the third aspect or any implementation of the third aspect. The access network element is configured to perform the method according to the second aspect or any implementation of the second aspect or the method according to the fourth aspect or any implementation of the fourth aspect.

According to a twelfth aspect, this application provides a computer storage medium, configured to store a computer program. The computer program, when executed, is configured to implement the communication method according to any one of the first aspect to the fourth aspect.

According to a thirteenth aspect, this application provides a computer program product including instructions. When the computer program product is run on at least one computing device, the at least one computing device is caused to implement the communication method according to any one of the first aspect to the fourth aspect of this application.

### BRIEF DESCRIPTION OF THE DRAWINGS

FIG. 1 is a structural diagram of an example communication system according to an embodiment of this application;
FIG. 2A is a schematic flowchart of a communication method according to an embodiment of this application;
FIG. 2B is a schematic flowchart of a communication method according to an embodiment of this application;
FIG. 3 is a schematic flowchart of another communication method according to an embodiment of this application;
FIG. 4 is a schematic flowchart of still another communication method according to an embodiment of this application;
FIG. 5 is a schematic flowchart of yet another communication method according to an embodiment of this application;
FIG. 6 is a schematic flowchart of yet another communication method according to an embodiment of this application;
FIG. 7 is a schematic structural diagram of an access network element according to an embodiment of this application; and
FIG. 8 is a schematic structural diagram of a terminal device according to an embodiment of this application.

### DESCRIPTION OF EMBODIMENTS

The following clearly and completely describes technical solutions in embodiments of this application with reference to accompanying drawings in the embodiments of this application. Terms used in the following embodiments are only intended to describe particular embodiments, but are not intended to limit this application. As used in this specification and the appended claims of this application, singular expressions forms of "one", "a", "said", "foregoing", "the", and "this" are intended to include expressions such as "one or more", unless otherwise clearly indicated in the context. It should be further understood that, in the embodiments of this application, "one or more" means one, two, or more. "And/or" describes an association relationship for associated objects and represents that three relationships may exist. For example, A and/or B may represent: only A exists, both A and B exist, and only B exists, where A and B may be singular or plural. The character "/" generally indicates an "or" relationship between the associated objects.

Reference to "an embodiment", "some embodiments", or the like described in this specification means that one or more embodiments of this application include a specific feature, structure, or characteristic described with reference to embodiments. Therefore, statements, for example, "in an embodiment", "in some embodiments", "in some other embodiments", and "in other embodiments" that appear at different places in this specification do not necessarily mean referring to a same embodiment. Instead, the statements mean "one or more but not all of embodiments", unless otherwise specifically emphasized in another manner. The terms "include", "contain", "have" and their variations mean "including but not limited to", unless otherwise specially emphasized in other ways.

"A plurality of" involved in embodiments of this application refers to two or more. It should be noted that in the descriptions of the embodiments of this application, the terms such as "first" and "second" are merely used for a purpose of distinguishing descriptions and are neither intended to indicate or imply relative importance nor intended to indicate or imply a sequence.

The embodiments of this application are applied to a communication system, which may be a fifth generation (5G) communication system, a hybrid architecture of LTE and 5G, a 5G new radio (5G New Radio, 5G NR) system, a new communication system that appears in future communication development, or the like.

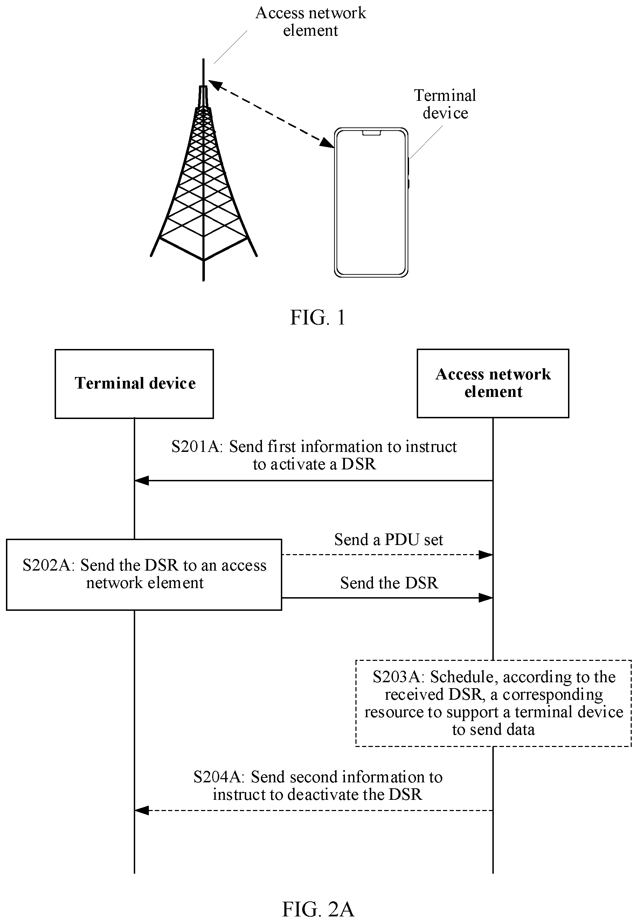

An example of the communication system is shown in FIG. 1. FIG. 1 includes an access network element and a terminal device.

In an embodiment provided in this application, the access network element may be any device located on a network side and has a radio transceiver function, and includes, but is not limited to, a base station (gNodeB or gNB) or a transmission receiving point (transmission receiving point/transmission reception point, TRP) in new radio (new radio, NR). The access network element may be a macro base station, a micro base station, a pico base station, a small cell, a relay station, a balloon station, or the like. The access network element may include one or more intra-base-station or inter-base-station transmission reception points (Transmission Reception Point, TRP). The access network element may alternatively be a wireless controller in a cloud radio access network (cloud radio access network, CRAN) scenario, a centralized unit (centralized unit, CU), and/or a distributed unit (distributed unit, DU). The access network element may communicate with a terminal device, or may communicate with a terminal device via a relay station. The terminal device may communicate with a plurality of base stations of different technologies. For example, the terminal device may communicate with a base station supporting an LTE network, or may communicate with a base station supporting a 5G network, or may support dual connectivity to a base station in an LTE network and a base station in a 5G network.

In the embodiments provided in this application, the terminal may be in various forms, for example, a mobile phone (mobile phone), a tablet computer (Pad), a computer with a wireless transceiver function, a virtual reality (virtual reality, VR) terminal device, an augmented reality (augmented reality, AR) terminal device, a wireless terminal in industrial control (industrial control), an in-vehicle terminal device, a wireless terminal in self driving (self driving), a wireless terminal in remote medical (remote medical), a wireless terminal in a smart grid (smart grid), a wireless terminal in transportation safety (transportation safety), a wireless terminal in a smart city (smart city), a wireless terminal in a smart home (smart home), a wearable terminal device, or the like. UE may also sometimes be referred to as a terminal device, an access terminal device, an in-vehicle terminal, an industrial control terminal, a UE unit, a UE station, a mobile station, a mobile console, a remote station, a remote terminal device, a mobile device, a UE terminal device, a terminal device, a wireless communication device, a UE agent, a UE apparatus, or the like. The terminal may alternatively be a fixed terminal or a mobile terminal.

Descriptions are provided above by using an example in which the communication system includes a terminal device and an access network element. In another possible implementation, the communication system may include a plurality of terminal devices or a plurality of access network elements. Alternatively, in another possible implementation, the access network element in the communication system may be replaced with a network element in another form. This is not limited. For ease of understanding, interaction between a terminal device and an access network element is still used as an example for description below.

In an actual application scenario, data of a service, such as an XR service, run on a terminal device may be organized and transmitted in a form of a protocol data unit PDU set. Specifically, a plurality of PDUs in close association with each other may be located in one group, and the group of PDUs is referred to as a PDU set (PDU set). Usually, if a sending party successfully transmits only some PDUs in the PDU set to a receiving party, this has no gain for improving user experience. Therefore, generally, all PDUs in an entire PDU set are successfully transmitted between the terminal device and the access network element, or none of the PDUs is transmitted (that is, the entire PDU set is discarded). For example, in an XR service, due to a feature of video decoding, video stream data may be usually organized and transmitted in a form of a PDU set.

An example in which a terminal device sends a PDU set to an access network element is used. The access network element may instruct the terminal device to activate discarding configuration for a to-be-transmitted or being-transmitted PDU set, that is, the PDU set is discarded if transmission of the entire PDU set is not completed within a specified time period. However, discarding of the PDU set may reduce quality of a service run on the terminal device, thereby degrading user experience of the service. For example, if the service run on the terminal device is a video service, after the terminal device uploads a video stream to the access network element, problems such as frame freezing and non-smooth playing frequently occur due to discarding of the PDU set when the video stream is finally played, affecting video watching experience of the user.

Based on this, this application provides a communication method, to improve quality of a service run on a terminal device and user experience of the service. During specific implementation, in a service running process of the terminal device, the access network element may generate first information and send the first information to the terminal device. Correspondingly, the terminal device may activate a delay status report according to the first information. In this way, in a process of transmitting the PDU set between the terminal device and the access network element, when remaining transmission durations of some PDUs in the PDU set are less than a threshold, the terminal device may generate a DSR for the PDUs. The DSR may include the remaining transmission durations of the PDUs, so that the access network element can schedule, according to the DSR, a corresponding resource for the PDUs for transmission in time within the remaining transmission durations of the PDUs. In this way, the entire PDU set can be successfully transmitted between the terminal device and the access network element, to avoid that the terminal device/the access network element discards the entire PDU set due to failed transmission of some PDUs in the PDU set, to improve quality of a service run on the terminal device and improve user experience of the service.

FIG. 2A shows a communication method according to an embodiment of this application. Data interaction between the terminal device and the access network element includes that the terminal device sends data to the access network element (data uplink), and the access network element delivers data to the terminal device (data downlink). For ease of understanding, in a procedure of the communication method shown in FIG. 2A, a process in which the terminal device sends a PDU set to the access network element is described. For a specific implementation process in which the access network element sends a PDU set to the terminal device, refer to description related to the embodiment shown in FIG. 2A for understanding.

A procedure of the communication method shown in FIG. 2A includes the following steps:
S201A: An access network element sends first information to a terminal device, where the first information is used to instruct to activate a DSR.

The delay status report is related information used to report a delay of uplink data or downlink data of the terminal device. The delay related information may be a remaining duration, a maintenance duration, or a buffering duration. All information related to a delay may be reported in the delay status report. The uplink data is a general term, and may be a protocol data unit set, a protocol data unit, or a service data unit (service data unit, SDU). For ease of description, the delay status report is abbreviated as DSR (delay status reporting), and the protocol data unit is abbreviated as PDU.

In a possible implementation, the access network element may send a message 1 to the terminal device. The message 1 may carry the first information used to instruct to activate the DSR. For example, the first information may be located in a partial field of the message 1, and a particular value of the field may instruct to activate the DSR.

In an actual application, the terminal device may upload one or more PDU sets to the access network element. For example, the terminal device may send, to the access network element in a form of a PDU set, a video stream generated in a service running process. In addition, in addition to sending the PDU set to the access network element, the terminal device may further send an independent PDU (not belonging to the PDU set) to the access network element.

In addition, for a PDU set sent by the terminal device to the terminal device, the access network element may further instruct the terminal device to activate discarding of the PDU set, that is, instruct to discard, when receiving the PDU set, the entire PDU set if packet loss occurs in the PDU set.

In this embodiment, after receiving the first information, the terminal device may activate the DSR according to the first information. Activating the DSR refers to activating a processing procedure corresponding to the DSR, including triggering generation of the DSR, sending the DSR to the access network element, and the like. This is not limited.

S202A: The terminal device sends the DSR to the access network element.

In this embodiment, in a process of sending uplink data to the access network element, the terminal device may detect whether a remaining transmission duration of the uplink data is less than a threshold. In addition, when the remaining transmission duration of the uplink data is less than the threshold, the terminal device may trigger the DSR to generate and send the DSR.

In a possible implementation, when starting to send a PDU set, the terminal device may start a timer for each PDU in the PDU set, and calculate a remaining transmission duration of each PDU according to a timing duration of the timer (or a running duration of the timer). Then, the terminal device may determine whether a current remaining transmission duration is less than the threshold (for example, 10 milliseconds). If the duration is less than the threshold, the terminal device may trigger the DSR, and when there is a resource for sending the DSR, the DSR is sent through the resource. If the duration is greater than the threshold, the terminal device does not trigger the DSR.

The generated DSR may include an identifier of a PDU set, identifiers of to-be-transmitted PDUs in the PDU set, remaining transmission durations of the PDUs, an identifier of a logical channel group (logical channel group, LCG), a corresponding remaining duration, and a corresponding data volume. The data volume may be a data volume of the PDU set or a data volume of a PDU/SDU, and may further include information such as a total data volume of PDUs whose remaining transmission durations are less than the threshold. Information content included in the DSR is not limited in this embodiment.

In this way, the access network element can learn, according to the received DSR, information about a remaining transmission duration of a PDU that has not been transmitted when the terminal device receives the PDU set, so that the access network element can perform corresponding processing based on the learned information. Optionally, the method shown in FIG. 2A may further include:
S203A: The access network element schedules, according to the received DSR, a corresponding resource to support the terminal device to send data.

Uplink data of the terminal device (that is, data sent to the access network element) may be a remaining PDU in the PDU set, and is specifically a PDU that is in the PDU set and that is not transmitted to the access network element.

In a possible implementation, the access network element may determine, according to the DSR, a current logical channel with a remaining transmission duration that is relatively short, and schedule a resource for uplink data on the logical channel (the logical channel preferentially transmits PDUs with a relatively short remaining time, and if the uplink data includes a PDU with a relatively long remaining transmission duration, transmission of the PDUs is completed before a resource is scheduled for transmission), and a scheduled resource volume corresponds to a total data volume of the PDUs. In this way, the terminal device can successfully send all PDUs in the PDU set within a specified time period. That is, a PDU that has not been transmitted in the PDU set may be transmitted to the access network element within a time period corresponding to a remaining transmission duration of the PDU, to avoid that the PDU set includes a PDU that has not been successfully sent and the terminal device discards the entire PDU set.

In this way, the access network element instructs to activate the DSR, so that in a process in which the terminal device sends the PDU set to the access network element, the access network element can obtain, in time, remaining transmission durations of PDUs that have not been transmitted in the PDU set. Therefore, the access network element can schedule a resource for the PDUs in time (that is, within a time period corresponding to the remaining transmission durations), so that the terminal device transmits the PDUs to the access network element based on the resource, to avoid that the terminal device discards the entire PDU set because of packet loss in the PDU set. In this way, the access network element can receive the entire PDU set, thereby improving quality of a service run on the terminal device and user experience of the service.

Further, the access network element not only may instruct to activate the DSR, but also may instruct to deactivate the DSR. Specifically, the method shown in FIG. 2A may further include:
S204A: The access network element sends second information to the terminal device, where the second information is used to instruct to deactivate the DSR.

In a possible implementation, the access network element may send a message 2 to the terminal device. The message 2 may carry the second information used to instruct to deactivate the DSR. For example, the second information may be located in a partial field of the message 2, and a particular value of the field may instruct to deactivate the DSR.

In this embodiment, after receiving the second information, the terminal device deactivates the DSR according to the second information.

In this case, in a process of sending the PDU set to the access network element, even if remaining transmission durations of some PDUs in the PDU set are less than the threshold, the terminal device may not need to send the DSR to the access network element. For example, when sending some PDU sets of relatively low importance, the terminal device does not need to generate a DSR and send the DSR to the access network element.

It should be noted that the procedure of the method shown in FIG. 2A is merely used as an implementation example, and is not used for limitation. For example, in the embodiment shown in FIG. 2A, an example in which the terminal device receives the first information delivered by the access network element is used for description. In another embodiment, the terminal device may alternatively obtain the first information in another manner. For example, the terminal device may generate the first information according to other information in a message delivered by the access network element, or the terminal device may generate the first information autonomously. For example, the terminal device may autonomously activate the DSR. The terminal device may alternatively obtain the second information in another manner. This is not limited in this embodiment. For another example, in another possible embodiment, step S203A and step S204A may not be performed.

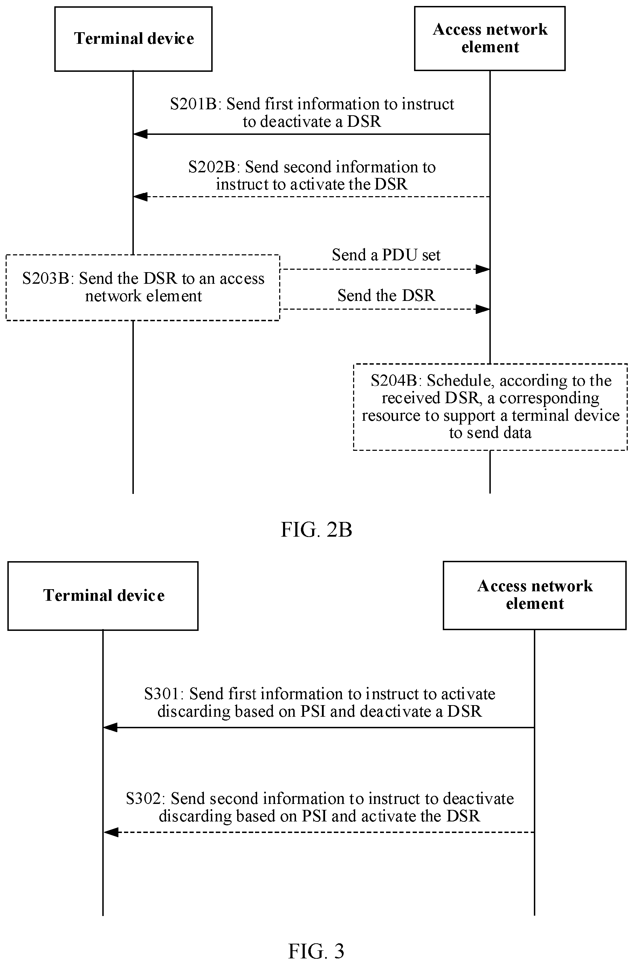

In addition, this application further provides another communication method, as shown in FIG. 2B. For ease of understanding, in a procedure of the communication method shown in FIG. 2B, a process in which the terminal device sends a PDU set to the access network element is still described. For a specific implementation process in which the access network element sends a PDU set to the terminal device, refer to description related to the embodiment shown in FIG. 2B for understanding.

A procedure of the communication method shown in FIG. 2B includes the following steps:
S201B: An access network element sends first information to a terminal device, where the first information is used to instruct to deactivate a DSR.

In this embodiment, in a process of sending data to the access network element, the terminal device may specifically send a plurality of PDU sets to the access network element. In a process of sending the PDU set to the access network element, it is defaulted that the terminal device generates a DSR for PDUs whose remaining transmission durations are less than the threshold in the PDU set, and sends the DSR to the access network element. Correspondingly, the access network element may schedule a resource for the PDUs in time according to the received DSR, to support the terminal device to send the PDUs to the access network element in time by using the resource in a time period corresponding to the remaining transmission durations.

In an actual application scenario, because transmission resources of the access network element are usually limited, network congestion may occur on the access network element. In a case of network congestion, if the terminal device has a relatively large quantity of PDU sets that need to be transmitted to the terminal device, in a process in which the terminal device sends the plurality of PDU sets, packet loss often occurs (that is, some PDUs in the PDU set are not successfully transmitted to the terminal device). In this case, the terminal device frequently sends a DSR to the access network element for a PDU that is to be lost (that is, a PDU whose remaining transmission duration is less than the threshold) in each PDU set. Therefore, the access network element preferentially schedules, based on a large quantity of received DSRs, resources to transmit PDUs that are to be lost in the PDU sets to the terminal device (because the remaining transmission duration indicated by the DSR is generally shorter, the access network element may preferentially schedule a resource for a PDU with a shorter remaining transmission duration to transmit data). Consequently, more PDU sets accumulate on the terminal device to wait for the access network element to schedule resources for data transmission. In addition, the terminal device sends more and more DSRs to the access network element, thereby aggravating network congestion of the access network element.

Therefore, the access network element may send the first information to the terminal device, where the first information is used to instruct to deactivate the DSR. Usually, after receiving the first information, the terminal device may perform an operation of deactivating the DSR.

In this way, in a process in which the terminal device sends the PDU set to the access network element, even if packet loss is to occur in the sent PDU set, the terminal device does not need to generate and feed back a DSR. In this way, in a case of resource shortage, resources on the access network element implement transmission of as many PDU sets as possible in a short time, thereby relieving network congestion of the access network element and improving quality of a service on the terminal device and improving user experience of the service.

In a possible implementation, the access network element may send a message 1 to the terminal device. The message 1 may carry the first information used to instruct to deactivate the DSR. For example, the first information may be located in a partial field of the message 1, and a particular value of the field may instruct to deactivate the DSR.

S202B: The access network element sends second information to the terminal device, where the second information is used to instruct to activate the DSR.

In a possible implementation, the access network element may send a message 2 to the terminal device. The message 2 may carry the second information used to instruct to activate the DSR. For example, the second information may be located in a partial field of the message 2, and a particular value of the field may instruct to activate the DSR. Usually, after receiving the second information, the terminal device may perform an operation of activating the DSR.

S203B: The terminal device sends the DSR to the access network element.

In this embodiment, after activating the DSR, in a process of sending the PDU set to the access network element, the terminal device may detect whether a remaining transmission duration of a PDU that has not been transmitted in the PDU set is less than the threshold. In addition, when a remaining transmission duration of a PDU is less than the threshold, the terminal device may trigger the DSR to generate and send the DSR.

For a specific implementation process in which the terminal device generates and sends the DSR, refer to the related description of the embodiment shown in FIG. 2A, and details are not described herein again.

S204B: The access network element schedules, according to the received DSR, a corresponding resource to support the terminal device to send data.

In a possible implementation, the access network element may determine, according to the DSR, a current logical channel with a remaining transmission duration that is relatively short, and schedule a resource for uplink data on the logical channel (the logical channel preferentially transmits PDUs with a relatively short remaining time, and if the uplink data includes a PDU with a relatively long remaining transmission duration, transmission of the PDUs is completed before a resource is scheduled for transmission), and a scheduled resource volume corresponds to a total data volume of the PDUs. In this way, the terminal device can successfully send all PDUs in the PDU set within a specified time period. That is, a PDU that has not been transmitted in the PDU set may be transmitted to the access network element within a time period corresponding to a remaining transmission duration of the PDU, to avoid that the PDU set includes a PDU that has not been successfully sent and the terminal device discards the entire PDU set.

It should be noted that the procedure of the method shown in FIG. 2B is merely used as an implementation example, and is not used for limitation. In another possible embodiment, step S202B to step S204B may not be performed.

In the embodiments shown in FIG. 2A and FIG. 2B, a process in which an access network element instructs to activate or deactivate a DSR is mainly described. In an actual application scenario, because transmission resources of the access network element are usually limited, network congestion may occur on the access network element. In this case, the access network element may introduce a mechanism of discarding based on protocol data unit set importance (protocol data unit set importance, PSI). That is, in a case of resource shortage, when the importance of a first PDU set is higher than the importance of a second PDU set, and remaining transmission durations of the first PDU set and the second PDU set are similar, the terminal device may discard the first PDU set, and preferentially send the second DU set with higher importance to the access network element.

However, in some time periods, the terminal device may have a plurality of PDU sets that need to be transmitted to the access network element. In addition, when network congestion may occur on the access network element, resource shortage occurs on the access network element, and in a process in which the terminal device sends a plurality of PDU sets, packet loss often occurs (that is, some PDUs in a PDU set are not successfully transmitted to the access network element). Therefore, when the terminal device activates the DSR, the terminal device frequently sends the DSR to the access network element for a PDU that is to be lost in each PDU set. Therefore, the access network element preferentially schedules, based on a large quantity of received DSRs, resources for the PDUs to support the terminal device to transmit PDUs that are to be lost in the PDU sets to the access network element (because the remaining transmission duration indicated by the DSR is generally shorter, the access network element preferentially schedules a resource for a PDU with a shorter remaining transmission duration to transmit data). Consequently, more PDU sets accumulate on the terminal device to wait for resource scheduling for data transmission, thereby aggravating network congestion of the access network element.

Based on this, this application provides another communication method. By instructing to activate discarding based on PSI and deactivate a DSR, network congestion on the access network element is relieved. With reference to FIG. 3, a procedure of another communication method according to this application is described below.

FIG. 3 shows another communication method according to an embodiment of this application. For ease of understanding, in a procedure of the communication method shown in FIG. 3, a process in which the terminal device sends a PDU set to the access network element is mainly described. For a specific implementation process in which the terminal device sends a PDU set to the access network element, refer to description related to the embodiment shown in FIG. 3 for understanding.

A procedure of the communication method shown in FIG. 3 includes the following steps:
S301: An access network element sends first information to a terminal device, where the first information is used to instruct to activate discarding based on PSI and instruct to deactivate a DSR.

Usually, after receiving the first information, the terminal device may activate discarding based on PSI and deactivate the DSR according to the first information. In a process of sending data to the access network element, the terminal device may specifically send a plurality of PDU sets to the access network element.

In an actual application scenario, because resources used for transmitting data on the access network element are usually limited, when the terminal device generates, in a short time, a relatively large quantity of PDU sets that need to be transmitted to the access network element, it may be difficult for the limited resources on the access network element to support the terminal device to transmit each PDU set to the access network element in a specified time period corresponding to the PDU set. For example, the access network element schedules a resource to support transmission of a PDU set 1 to a PDU set 8 to the access network element by the terminal device. In this process, a PDU set 9 and a PDU set 10 on the terminal device are in a state of waiting for resource allocation. In a process of transmitting the PDU sets 1 to 8, the terminal device may generate a new PDU set. Consequently, a relatively large quantity of PDU sets may queue up in the terminal device to wait for the access network element to schedule a resource, and network congestion occurs on the access network element.

In a possible implementation, when the access network element is in a network congestion state, the terminal device may preferentially transmit a PDU set with higher importance to the access network element. For a PDU set with lower importance, when resources of the access network element are limited, the terminal device may discard the PDU set. Certainly, the access network element may also instruct to activate discarding based on PSI in another scenario. For ease of understanding and description, in this embodiment, activation of discarding based on PSI in a network congestion scenario is used as an example for description.

During specific implementation, the access network element may periodically detect whether network congestion occurs, and after determining that network congestion occurs, the access network element may send the first information to the terminal device, to use the first information to instruct to activate discarding based on PSI. In this way, in the process of sending a plurality of PDU sets to the access network element, the terminal device may preferentially send a PDU set with higher importance and discard a PDU set with lower importance.

It may be understood that, the terminal device usually has a plurality of PDU sets with higher importance. In this case, when network congestion occurs on the access network element, in a process in which the terminal device sends a PDU set to the access network element, packet loss easily occurs. That is, remaining transmission durations of some PDUs (PDUs not transmitted to the access network element) in the currently sent PDU set are prone to be less than the threshold. In this case, the terminal device generates a DSR for the PDUs, and sends the DSR to the access network element. Therefore, the access network element preferentially schedules resources for the PDUs for transmission based on the received DSR. This affects transmission of remaining PDU sets (also with higher importance) and may aggravate network congestion. In addition, even if resources are allocated to some PDU sets, the allocated resources may not support the terminal device to successfully transmit all data in the entire PDU sets to the access network element within a specified time period. Consequently, the terminal device discards a large quantity of PDU sets that cannot be entirely transmitted to the access network element. Before instructing to activate discarding based on PDI, the access network element may instruct in advance to activate discarding of a PDU set and activate the DSR.

Therefore, in this embodiment, while instructing to activate discarding based on PSI, the access network element may further instruct to deactivate the DSR. In this way, in a process in which the terminal device sends the PDU set, even if packet loss occurs in the sent PDU set, the terminal device does not need to generate and feed back a DSR. Correspondingly, in a case of resource shortage, the access network element schedules resources for the terminal device to transmit PDU sets, to implement transmission of as many PDU sets as possible in a short time, thereby relieving network congestion of the access network element and improving quality of a service on the terminal device and improving user experience of the service.

For example, when the service on the terminal device is a video service and network congestion occurs, the terminal device can send video frames (each video frame may be a PDU set) of different picture content in time, to avoid a problem such as frame freezing caused by network congestion when a video picture is finally watched by a user.

In addition, the access network element can activate discarding based on PSI and deactivate the DSR by using the first information, and there is no need to send a plurality of pieces of information for separate instruction. This can effectively reduce communication overhead between the access network element and the terminal device.

In a possible implementation, the access network element may send a message of a first type to the terminal device. The message of the first type may include a first field and a second field. The first field may be used to indicate a status of discarding based on PSI, and the status includes an activated state or a deactivated state. That is, the first field may be used to indicate whether to activate discarding based on PSI. In addition, the second field in the message of the first type may be used to indicate a status of the DSR, and the status includes an activated state or a deactivated state. That is, the second field may be used to indicate whether to activate the DSR. For example, the message of the first type may be a media access control control element (media access control control element, MAC CE) message, a downlink control information (downlink control information, DCI) message, or a radio link control (radio link control, RLC) message. This is not limited.

In a first implementation example, the access network element may deliver a message 1 to the terminal device. The message 1 may be specifically a MAC CE message, and the MAC CE message may include a field 1 and a field 2. A value of the field 1 is a first value. In this case, the first value of the field 1 is used to instruct to activate discarding based on PSI. A value of the field 2 is a second value. In this case, the second value of the field 2 is used to instruct to deactivate the DSR. The first value of the field 1 and the second value of the field 2 are the first information in this embodiment.

In a second implementation example, the access network element delivers a message 1 to the terminal device. The message 1 may be a MAC CE message, and the MAC CE message may include a first logical channel identifier (logical channel identification, LCID). In addition, the first LCID is used to instruct to activate discarding based on PSI and deactivate the DSR. The first LCID is the first information in this embodiment. In an actual application, the access network element may also deliver another LCID to the terminal device, to configure other content for the terminal device. For example, the access network element may also deliver another LCID to the terminal device, and may instruct to only activate discarding based on PSI, and does not instruct to deactivate the DSR.

It should be noted that the foregoing two implementation manners are merely used as example description. In another embodiment, the first information sent by the access network element to the terminal device may be implemented in another manner. This is not limited.

Further, the access network element not only may instruct to activate discarding based on PSI and deactivate the DSR, but also may instruct to deactivate discarding based on PSI and activate the DSR.

Optionally, the method shown in FIG. 3 may further include the following step:
S302: The access network element sends second information to the terminal device, where the second information is used to instruct to deactivate discarding based on PSI and activate a DSR.

Usually, after receiving the second information, the terminal device may deactivate discarding based on PSI and activate the DSR according to the second information.

For example, after transmission of the plurality of PDU sets is completed between the access network element and the terminal device in the activation configuration in step S301 and step S302, network congestion on the access network element can usually be effectively relieved. In this case, the terminal device may not need to continue to send a PDU set to the access network element based on the mechanism of discarding based on PSI. That is, for a PDU set with lower importance, sufficient resources can also be allocated for the terminal device to send the PDU set to the access network element, to reduce a packet loss rate between the access network element and the terminal device.

During specific implementation, the access network element may periodically detect whether network congestion ends, for example, may detect whether a quantity of PDU sets received by the access network element within a unit time period is greater than a preset quantity. In addition, when it is determined that the network congestion ends (for example, the quantity of the received PDU sets within the unit time period is less than the preset quantity), the access network element may send the second information to the terminal device. The second information can be used to instruct to deactivate discarding based on PSI, so that the terminal device does not need to distinguish importance of PDU sets, that is, sends both a PDU set with higher importance and a PDU set with lower importance to the access network element. In addition, the second information may further instruct to activate the DSR. In this way, in a process in which the terminal device sends a PDU set, when remaining transmission durations of some PDUs in the PDU set are less than a threshold, the terminal device may send a DSR to the access network element, so that the access network element preferentially schedules a resource to transmit the PDUs to the terminal device according to the DSR. In this way, when network congestion ends, quality of data transmission between the terminal device and the access network element can be improved.

For example, when the service on the terminal device is a video service and network congestion ends, the terminal device can receive a plurality of consecutive video frames (each video frame may be a PDU set), to improve smoothness of playing video images.

In a first implementation example, the access network element may deliver a message 2 of a first type to the terminal device. The message 2 may be specifically a MAC CE message, and the MAC CE message may include a field 1 and a field 2. A value of the field 1 is a third value. In this case, the third value of the field 1 is used to instruct to deactivate discarding based on PSI. A value of the field 2 is a fourth value. In this case, the fourth value of the field 2 is used to instruct to activate the DSR. The third value of the field 1 and the fourth value of the field 2 are the second information in this embodiment.

In an actual application scenario, in the message of the first type delivered by the access network element to the terminal device, when the value of the field 1 instructs to activate discarding based on PSI, the value of the field 2 may need to be used to instruct to deactivate the DSR. When the value of the field 1 instructs to deactivate discarding based on PSI, the value of the field 2 may be used to instruct to activate the DSR, or may be used to instruct to deactivate the DSR.

In a second implementation example, the access network element delivers a message 2 to the terminal device. The message 2 may be a MAC CE message, and the MAC CE message may include a second LCID. In addition, the second LCID is used to instruct to activate discarding based on PSI and deactivate the DSR. The second LCID is the second information in this embodiment.

The foregoing two implementation manners are merely used as example description. In another embodiment, the second information sent by the access network element to the terminal device may be implemented in another manner. This is not limited.

It should be noted that the procedure of the method shown in FIG. 3 is merely used as an implementation example, and is not used for limitation. For example, in another embodiment, the terminal device may alternatively obtain the first information and the second information in another manner, or in another embodiment, the access network element may not perform step S302 and the like. This is not limited in this embodiment.

In the method embodiment shown in FIG. 3, a process of improving user experience by relieving network congestion of the access network element is mainly described. In another possible embodiment, the access network element may also preferentially schedule resources to support the terminal device to transmit an entire PDU set with higher importance, to improve user experience.

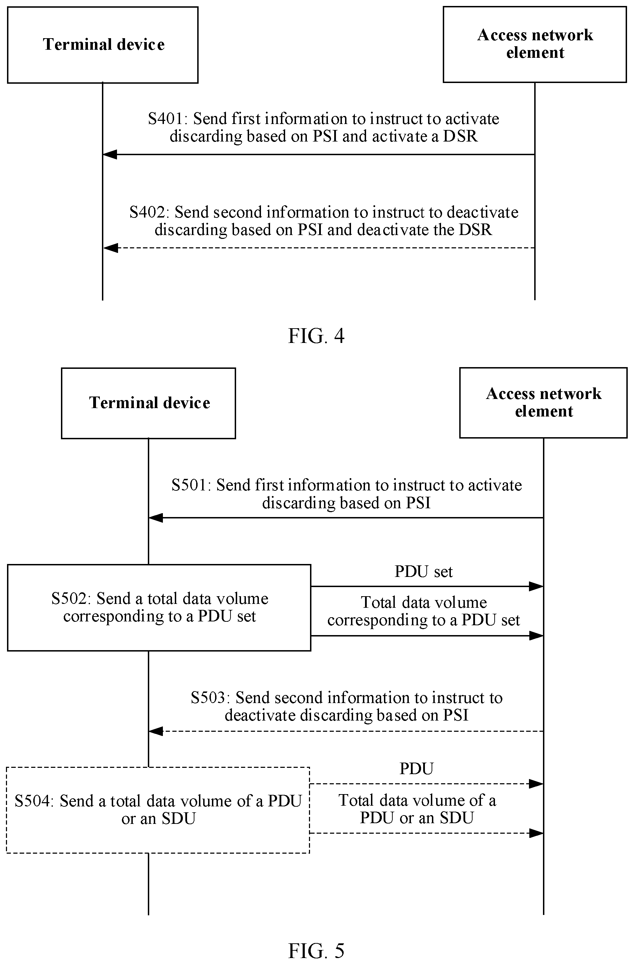

FIG. 4 is a schematic flowchart of another communication method. A procedure of the communication method includes the following steps:
S401: A terminal device sends first information to an access network element, where the first information is used to instruct to activate discarding based on PSI and instruct to activate a DSR.

In this embodiment, after receiving the first information, the terminal device may activate discarding based on PSI, and activate the DSR according to the first information.

In a process of sending data to the access network element, the terminal device may specifically send a plurality of PDU sets to the access network element. Because resources on the access network element are usually limited, it may be difficult to support the terminal device to transmit all of a plurality of PDU sets to the access network element in time. Therefore, the access network element may periodically detect whether network congestion occurs. A manner for the access network element to detect whether network congestion currently occurs is not limited in this embodiment.

In addition, when the access network element is in a network congestion state, the access network element may send the first information to the terminal device, to use the first information to instruct to activate discarding based on PSI. In this case, the terminal device preferentially transmits a PDU set with higher importance to the access network element. For a PDU set with lower importance, when resources are limited, the terminal device may discard the PDU set.

It may be understood that when network congestion occurs, if the access network element fails to schedule a resource in time to transmit a PDU set or a PDU whose remaining transmission duration is less than the threshold in the PDU set, packet loss easily occurs when the terminal device sends the PDU set. That is, at least one PDU in the PDU set cannot be successfully transmitted to the access network element. In some application scenarios, if some PDUs in the PDU set sent by the terminal device are not sent successfully, the terminal device may discard the entire PDU set, thereby affecting quality of the service on the terminal device.

Therefore, the access network element may further use the delivered first information to instruct to activate the DSR. In this way, in a process of receiving the PDU set, the terminal device may detect a remaining transmission duration corresponding to each PDU in the PDU set, and when detecting that remaining transmission durations of some PDUs in the PDU set are less than a threshold, generate a DSR for the PDUs and send the DSR to the access network element, so that the access network element may preferentially schedule resources for the PDUs according to the DSR, to support the terminal device to send, to the access network element, the PDUs that have not been transmitted in the PDU set.

In this way, for a PDU set that is currently being sent by the terminal device, the terminal device may send a DSR to the access network element, to notify, in time, the access network element to schedule resources, so that the terminal device can transmit, to the access network element in time, a PDU with a relatively small remaining transmission duration that has not been transmitted, to avoid that the terminal device discards the entire PDU set because the terminal device does not send some PDUs in the PDU set, thereby improving quality of the service on the terminal device and improving user experience. In addition, the access network element can activate discarding based on PSI and the DSR by using the first information, and there is no need to send a plurality of pieces of information for separate instruction. This can effectively reduce communication overhead between the access network element and the terminal device.

In a first implementation example, the access network element may deliver a message 1 of a first type to the terminal device. The message 1 may be specifically a MAC CE message, and the MAC CE message may include a field 1 and a field 2. A value of the field 1 is a first value. In addition, the first value of the field 1 is used to instruct to activate discarding based on PSI. A value of the field 2 is a second value. In addition, the second value of the field 2 is used to instruct to activate the DSR. The first value of the field 1 and the second value of the field 2 are the first information in this embodiment.

In a second implementation example, the access network element delivers a message 1 to the terminal device. The message 1 may be a MAC CE message, and the MAC CE message may include a first LCID. The first LCID is used to instruct to activate discarding based on PSI and activate the DSR. The first LCID is the first information in this embodiment.

It should be noted that the foregoing two implementation manners are merely used as example description. In another embodiment, the first information sent by the terminal device to the access network element may be implemented in another manner. This is not limited.

During actual application, before network congestion occurs, the access network element may instruct in advance to activate discarding of a PDU set. For example, the access network element may send a message 2 to the terminal device. The message 2 is used to instruct to activate discarding of a PDU set. In this way, in a process of sending the PDU set, if the terminal device does not complete transmission of all PDUs in the PDU set within a specified time period corresponding to the PDU set, the terminal device may discard the entire PDU set.

In this case, the DSR configuration function on the terminal device may be in an activated state, or may be in a deactivated state. Therefore, further, when instructing to activate discarding of a PDU set, the access network element may further instruct the terminal device to activate the DSR. For example, the message 2 sent by the access network element may instruct to activate the DSR. For specific implementations of activating discarding of a PDU set and activating the DSR by the access network element, and technical effects thereof, refer to related description in the foregoing embodiment, and details are not described herein again.

In this way, after receiving the first information sent by the access network element, the terminal device may activate discarding based on PSI according to the first information, and determine whether the DSR is activated currently. If yes, the terminal device may no longer need to activate the DSR, and if not, the terminal device performs an operation of activating the DSR.

Further, after network congestion on the access network element ends, the access network element may further deactivate configuration made during network congestion. Therefore, optionally, the embodiment shown in FIG. 4 may further include the following step:
S402: The access network element sends second information to the terminal device, where the second information is used to instruct to deactivate discarding based on PSI and deactivate a DSR.

In this embodiment, after receiving the second information, the terminal device may deactivate discarding based on PSI and deactivate the DSR according to the second information.

It may be understood that, after network congestion ends, the access network element may deactivate configuration made during network congestion, and may specifically instruct to deactivate discarding based on PSI and deactivate the DSR. During specific implementation, the access network element may periodically detect whether network congestion ends, and when it is determined that network congestion ends, the access network element may send the second information to the terminal device. The second information can be used to instruct to deactivate discarding based on PSI. For a process in which the access network element detects that the network congestion ends, refer to related description in the foregoing embodiment, and details are not described herein again.

In a first implementation example, the access network element may deliver a message 3 of a first type to the terminal device. The message 3 may be specifically a MAC CE message, and the MAC CE message may include a field 1 and a field 2. A value of the field 1 is a third value. In this case, the third value of the field 1 is used to instruct to deactivate discarding based on PSI. A value of the field 2 is a fourth value. In this case, the fourth value of the field 2 is used to instruct to deactivate the DSR. The third value of the field 1 and the fourth value of the field 2 are the second information in this embodiment.

In an actual application scenario, in the message of the first type delivered by the access network element to the terminal device, when the value of the field 1 is used to instruct to activate discarding based on PSI, the value of the field 2 may need to be used to instruct to activate the DSR. When the value of the field 1 instructs to deactivate discarding based on PSI, the value of the field 2 may be used to instruct to activate the DSR, or instruct to deactivate the DSR.

In a second implementation example, the access network element delivers a message 3 to the terminal device. The message 3 may be a MAC CE message, and the MAC CE message may include a second LCID. In addition, the second LCID is used to instruct to deactivate discarding based on PSI and deactivate the DSR. The second LCID is the second information in this embodiment.

The foregoing two implementation manners are merely used as example description. In another embodiment, the second information sent by the access network element to the terminal device may be implemented in another manner. This is not limited.

During actual application, after network congestion ends, the access network element may alternatively only instruct to deactivate discarding based on PSI. That is, DSR configuration of the terminal device may be in the activated state or may be in the deactivated state.

It should be noted that the procedure of the method shown in FIG. 4 is merely used as an implementation example, and is not used for limitation. For example, in another embodiment, the terminal device may alternatively obtain the first information and the second information in another manner, or in another embodiment, the access network element may not perform step S402 and the like. This is not limited in this embodiment.

In the method embodiment shown in FIG. 4, it is mainly described that the access network element may preferentially schedule resources to support the terminal device to send an entire PDU set with higher importance, to improve user experience. In another embodiment, the access network element may also improve accuracy of determining a data volume of a to-be-transmitted PDU, to improve user experience.

FIG. 5 is a schematic flowchart of still another communication method. A procedure of the communication method includes the following steps:
S501: An access network element sends first information to a terminal device, where the first information is used to instruct to activate discarding based on PSI.

Usually, after receiving the first information, the terminal device may activate discarding based on PSI according to the first information. Alternatively, the terminal uses a mechanism of discarding based on PSI according to the first information. For example, when the terminal device obtains the first information and determines that a priority of a PDU set is a low priority, the terminal device applies a first timer; otherwise, applies a second timer.

Correspondingly, the terminal device obtains the first information.

S502: The terminal device sends a total data volume corresponding to a PDU set.

The total data volume corresponding to the PDU set is when the remaining transmission duration corresponding to the PDU set is less than the threshold. The total data volume may include a total volume of all data packets in the currently buffered PDU set, or a total volume of newly transmitted data in the PDU set, or a total volume of retransmitted data in the PDU set. The newly transmitted data includes an SDU or a PDU. The remaining transmission duration corresponding to the PDU set is a minimum value of remaining transmission durations corresponding to the plurality of PDUs included in the PDU set. For example, it is assumed that the PDU set includes 10 PDUs, which are respectively a PDU0 to a PDU9, and the PDU0 to the PDU5 have been transmitted to the access network element. Remaining transmission durations respectively corresponding to the remaining PDU6, PDU7, PDU8, and PDU9 are 4 milliseconds, 8 milliseconds, 9 milliseconds, and 10 milliseconds in sequence. In this case, a remaining transmission duration corresponding to the entire PDU set is 4 milliseconds, that is, the remaining transmission duration corresponding to the PDU6.

In this embodiment, the sending, by the terminal device, data to the access network element may be specifically sending a plurality of PDU sets. Because resources on the access network element are usually limited, it may be difficult to support the terminal device to transmit all of a plurality of PDU sets to the access network element in time. Therefore, the access network element may periodically detect whether network congestion occurs.

When the access network element is in a network congestion state, the access network element may instruct to activate discarding based on PSI. During specific implementation, the access network element may send a message 1 to the terminal device. The message 1 may include the first information, and the first information can be used to instruct to activate discarding based on PSI. In this case, the access network element preferentially transmits a PDU set with higher importance to the terminal device. For PDU sets with lower importance, when resources are limited, the access network element may discard the PDU sets.

It may be understood that when network congestion occurs, if the access network element schedules an inappropriate quantity of resources for one or more PDUs that have not been transmitted to the terminal device in the PDU set, the scheduled resources may not be capable of supporting the terminal device to transmit all the PDUs in the PDU set to the access network element within a specified time period. Consequently, packet loss easily occurs in a process of sending the PDU set by the terminal device. That is, at least one PDU in the PDU set cannot be successfully transmitted to the access network element. It may be understood that if the access network element schedules excessively few resources, some PDUs in the PDU set still cannot be transmitted to the access network element in time. During actual application, if some PDUs in the PDU set sent by the terminal device cannot be successfully sent, the terminal device may discard the entire PDU set. Consequently, quality of the service on the terminal device is affected, and user experience of the service is affected. However, if the access network element schedules excessively many resources, resource waste may be caused.

Therefore, after receiving the first information, the terminal device may report an accurate data volume for the plurality of PDUs that have not been transmitted in the PDU set, that is, report the total data volume corresponding to the PDU set described in step S501, so that the access network element can allocate an appropriate quantity of resources based on the data volume. In this way, the access network element can schedule an appropriate quantity of resources to support the terminal device to transmit, to the access network element in time within a specified time period, all of the plurality of PDUs that have not been transmitted in the PDU set, thereby avoiding that the terminal device finally discards the entire PDU set. In addition, only by using the first information, the access network element can activate discarding based on PSI and instruct to report a total data volume of remaining PDUs that are not transmitted in the PDU set, and there is no need to send a plurality of pieces of information for separate instruction. This can effectively reduce communication overhead between the access network element and the terminal device.

In a first implementation example, the access network element delivers a message 1 to the terminal device. The message 1 may be specifically a MAC CE message, and the MAC CE message may include a field 1 and a field 2. A first value of the field 1 is used to instruct to activate discarding based on PSI for the PDU set, and a second value of the field 2 is used to instruct to report a total data volume corresponding to the PDU set. The first value of the field 1 and the second value of the field 2 are the first information in this embodiment.

In a second implementation example, the access network element delivers a message 2 to the terminal device. The message 1 may be specifically a MAC CE message, and the MAC CE message may include a field 1. A third value of the field 1 is used to instruct to activate discarding based on PSI for the PDU set. In addition, after receiving the message 2, the terminal device may activate, by default, a mechanism for reporting a total data volume corresponding to the PDU set. The third value of the field 1 is the first information in this embodiment.

In a third implementation example, the access network element delivers a message 3 to the terminal device. The message 3 may be a MAC CE message, and the MAC CE message may include a first LCID. The first LCID is used to instruct to activate discarding based on PSI and instruct to report the total data volume corresponding to the PDU set. The first LCID is the first information in this embodiment.

It should be noted that the foregoing plurality of implementation manners are merely used as example description. In another embodiment, the first information sent by the access network element to the terminal device may be implemented in another manner. This is not limited.

After activating discarding based on PSI, the terminal device may start a timer for each PDU in the PDU set when starting to send the PDU set, and calculate a remaining transmission duration of each PDU according to a duration of the timer. Then, the terminal device may determine whether the current PDU set includes a PDU whose remaining transmission duration is less than the threshold. If not, the terminal device continues to send a remaining to-be-transmitted PDU in the PDU set. If yes, while continuing to send the PDU set, the terminal device may calculate a total data volume of the plurality of PDUs that have not been transmitted in the PDU set, that is, a total data volume corresponding to the PDU set, and generate a DSR according to the total data volume. In this case, the generated DSR may include information such as an identifier of the PDU set, a remaining transmission duration corresponding to the PDU set (that is, a minimum value of remaining transmission durations corresponding to the plurality of PDUs), and a total data volume corresponding to the PDU set.

In this embodiment, the terminal device reports, in the DSR, the total data volume corresponding to the PDU set. In another possible implementation, the terminal device may alternatively report, in another manner, the total data volume corresponding to the PDU set, for example, may separately send a message to the access network element to report the information.

In this way, the access network element preferentially schedules, based on the total data volume reported by the terminal device, a corresponding resource for a PDU that has not been transmitted in the PDU set, to support the terminal device to send the remaining PDU in the PDU set to the access network element in time by using the resource. In this way, the terminal device can successfully send the entire PDU set, to avoid that the terminal device discards the entire PDU set due to packet loss in the PDU set, thereby improving quality of a service on the terminal device and user experience of the service.

Optionally, the method shown in FIG. 5 may further include the following step:
S503: An access network element sends second information to a terminal device, where the second information is used to instruct to deactivate discarding based on PSI.
S504: The terminal device sends a total data volume of a PDU or an SDU to the terminal device.

It may be understood that, after network congestion ends, the access network element may deactivate configuration made during network congestion, and may specifically instruct to deactivate discarding based on PSI. In this case, in a process of sending the PDU set, the terminal device may no longer need to report the total data volume corresponding to the PDU set.

In a first implementation example, the access network element delivers a message 4 to the terminal device. The message 4 may be specifically a MAC CE message, and the MAC CE message may include a field 1 and a field 2. A fourth value of the field 1 is used to instruct to deactivate discarding based on PSI for the PDU set, and a fifth value of the field 2 is used to instruct to report a total data volume of a PDU or an SDU. The fourth value of the field 1 and the fifth value of the field 2 are the first information in this embodiment.

In a second implementation example, the access network element delivers a message 5 to the terminal device. The message 5 may be specifically a MAC CE message, and the MAC CE message may include a field 1. A sixth value of the field 1 is used to instruct to activate discarding based on PSI for the PDU set. In addition, after receiving the message 5, the terminal device may deactivate, by default, the mechanism for reporting a total data volume corresponding to the PDU set. The fifth value of the field 1 is the first information in this embodiment.

In a third implementation example, the access network element delivers a message 6 to the terminal device. The message 6 may be a MAC CE message, and the MAC CE message may include a second LCID. The second LCID is used to instruct to activate discarding based on PSI and instruct to send a total data volume of a PDU or an SDU. The second LCID is the first information in this embodiment.

The foregoing plurality of implementation manners are merely used as example description. In another embodiment, the second information sent by the access network element to the terminal device may be implemented in another manner. This is not limited.

In an actual application, the access network element may send data to the terminal device not only in a form of a PDU set, but also in a form of a single PDU. Therefore, after the terminal device receives the second information, when the data sent by the terminal device to the access network element is a plurality of independent PDUs (each PDU does not belong to a PDU set), remaining transmission durations respectively corresponding to the plurality of PDUs to be transmitted by the access network element may be detected. When detecting that remaining transmission durations of one or more PDUs are less than the threshold, the terminal device may calculate a sum of data volumes of the one or more PDUs, and generate a DSR according to the sum of the data volumes. In this case, the generated DSR may include information such as identifiers of the one or more PDUs, a remaining transmission duration corresponding to each PDU, and a total data volume of the one or more PDUs. Therefore, the access network element may schedule a corresponding quantity of resources for the one or more PDUs according to the received DSR, and use the scheduled resources to transmit all the PDUs to the terminal device within a time period specified by the remaining transmission duration.

Alternatively, the terminal device may detect remaining transmission durations of a plurality of to-be-transmitted SDUs. When detecting that remaining transmission durations of one or more SDUs are less than the threshold, the terminal device may calculate a sum of data volumes of the one or more SDUs, and generate a DSR according to the sum of the data volumes. Alternatively, the terminal device may calculate a total data volume of PDUs and SDUs whose remaining transmission durations are less than the threshold, and generate the DSR according to the total data volume.

It should be noted that the procedure of the method shown in FIG. 5 is merely used as an implementation example, and is not used for limitation. For example, in another embodiment, the terminal device may alternatively obtain the first information and the second information in another manner, or in another embodiment, the access network element may not perform step S503, step S504, and the like. This is not limited in this embodiment.

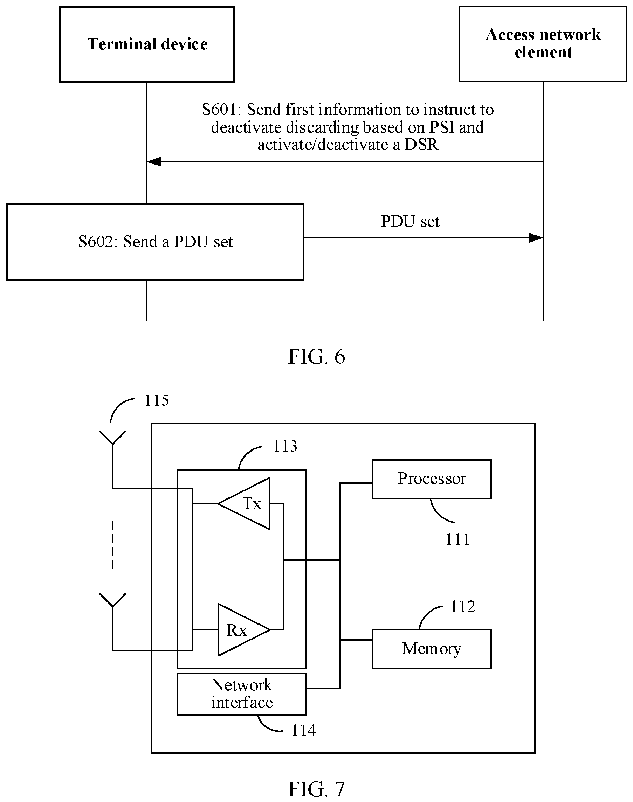

In addition, this application further provides yet another communication method. FIG. 6 is a schematic flowchart of a communication method. For ease of understanding, in a procedure of the communication method shown in FIG. 6, a process in which the terminal device sends a PDU set to the access network element is mainly described. For a specific implementation process in which the terminal device sends a PDU set to the access network element, refer to description related to the embodiment shown in FIG. 6 for understanding.

A procedure of the communication method shown in FIG. 6 includes the following steps:
S601: A terminal device sends first information to an access network element, where the first information is used to instruct to deactivate discarding based on PSI, and the first information is further used to instruct to activate/deactivate a DSR.

In this embodiment, while instructing to deactivate discarding based on PSI, the access network element may further instruct to activate or deactivate the DSR.

In a first implementation example, the access network element may deliver a message 1 to the terminal device. The message 1 may be specifically a MAC CE message, and the MAC CE message may include a field 1 and a field 2. The value of the field 1 is used to instruct to deactivate discarding based on PSI, and the value of the field 2 is used to instruct to activate/deactivate the DSR. The value of the field 1 and the value of the field 2 are the first information described in step S601.

In a second implementation example, the access network element delivers a message 1 to the terminal device. The message 1 may be a MAC CE message, and the MAC CE message may include an LCID. In addition, the LCID is used to instruct to activate discarding based on PSI and instruct to activate/deactivate the DSR. The LCID is the first information described in step S601. In an actual application, when the value of the LCID is another value, the LCID may be used for configuring other content for the terminal device.

During actual application, before instructing to deactivate discarding based on PSI, the access network element may instruct in advance to activate discarding based on PSI. In addition, the access network element may further instruct in advance to activate discarding of a PDU set, and the like.

Usually, after receiving the first information, the terminal device may deactivate discarding based on PSI and activate/deactivate the DSR according to the first information.

S602: The terminal device sends a PDU set to the access network element.

For example, the terminal device may deactivate discarding based on PSI and activate the DSR. In this case, in a process of receiving the PDU set delivered by the access network element, the terminal device may perform timing on each PDU in the PDU set, and calculate a remaining transmission duration of each PDU according to a timing duration. Then, the terminal device may determine whether a PDU whose remaining transmission duration is less than a threshold (for example, 10 milliseconds) currently exists. If not, the terminal device continues to receive a remaining to-be-transmitted PDU in the PDU set; or if yes, the terminal device may generate a DSR while continuing to receive the PDU set, and report the DSR to the access network element.

Alternatively, the terminal device may deactivate discarding based on PSI and deactivate the DSR. In this case, in the process of receiving the PDU set delivered by the access network element, the terminal device may not need to perform the operation of detecting the remaining transmission duration of each PDU in the PDU set. In this way, when packet loss occurs in the finally received PDU set, if the terminal device already activates discarding of a PDU set, the terminal device may discard the PDU set, and if the terminal device does not activate discarding of a PDU set, the terminal device may reserve the PDU set.

In this way, while instructing the terminal device to deactivate discarding based on PSI, the access network element can instruct to activate or deactivate the DSR at the same time, and does not need to send a plurality of pieces of information to respectively instruct to deactivate discarding based on PSI and instruct to activate/deactivate the DSR. This can effectively reduce communication overhead between the access network element and the terminal device. Based on this, the access network element may use more resources for transmission of PDU sets with the terminal device, to satisfy a data transmission requirement of a service on the terminal device, thereby ensuring quality of the service on the terminal device and improving user experience of the service.

It should be noted that the procedure of the method shown in FIG. 6 is merely used as an implementation example, and is not used for limitation. For example, in another embodiment, the terminal device may alternatively obtain the first information in another manner. This is not limited in this embodiment.

In addition, in an actual application, the embodiments shown in FIG. 2A to FIG. 6 may further be combined, including combining the embodiments as granularities, or combining method steps in the embodiments as granularities. This is not limited. Alternatively, other steps may be added to the embodiments shown in FIG. 2A to FIG. 6. This is not limited in this embodiment.

In addition, this application further provides a terminal device, including:
an obtaining module, configured to obtain first information; and a sending module, configured to send a delay status report, where the first information is used to instruct to activate the delay status report; or
an obtaining module, configured to obtain second information, where the second information is used to instruct to deactivate the delay status report.

In a possible implementation, the second information is further used to instruct to activate discarding based on protocol data unit set importance.

In a possible implementation, the first information is further used to instruct to deactivate discarding based on protocol data unit set importance.

In a possible implementation, the obtaining module is configured to:
obtain a first message of a first type, where the first message includes the first information or the second information;
where the message of the first type includes a first field and a second field, the first field is used to indicate a status of discarding based on protocol data unit set importance, the status includes an activated state or a deactivated state, the second field is used to indicate a status of a delay status report, and the status of the delay status report includes an activated state or a deactivated state.

In a possible implementation, the first message includes the second information, a value of the first field in the first message is a first value, the first value of the first field is used to instruct to activate discarding based on protocol data unit set importance, a value of the second field in the first message is a second value, and the second value of the second field is used to instruct to deactivate the delay status report.

In a possible implementation, the first message includes the first information, a value of the first field in the first message is a third value, the third value of the first field is used to instruct to deactivate discarding based on protocol data unit set importance, a value of the second field in the second message is a fourth value, and the fourth value of the second field is used to instruct to activate the delay status report.

In a possible implementation, the obtaining module is configured to:
obtain a second message, where the second message includes a first logical channel identifier, and the first logical channel identifier is used to instruct to activate discarding based on protocol data unit set importance and instruct to deactivate the delay status report.

In a possible implementation, the obtaining module is configured to:
obtain a third message, where the third message includes a second logical channel identifier, and the second logical channel identifier is used to instruct to deactivate discarding based on protocol data unit set importance and instruct to activate the delay status report.

In a possible implementation, the second information is further used to instruct to deactivate discarding based on protocol data unit set importance.

In a possible implementation, the first information is further used to instruct to activate discarding based on protocol data unit set importance.

In a possible implementation, the obtaining module is configured to:
obtain a fourth message of the first type, where the fourth message includes the first information or the second information;
where the message of the first type includes a first field and a second field, the first field is used to indicate a status of discarding based on protocol data unit set importance, the status includes an activated state or a deactivated state, the second field is used to indicate a status of a delay status report, and the status of the delay status report includes an activated state or a deactivated state.

In a possible implementation, the fourth message includes the first information, a value of the first field in the fourth message is a fifth value, the fifth value of the first field is used to instruct to activate discarding based on protocol data unit set importance, a value of the second field in the fourth message is a sixth value, and the sixth value of the second field is used to instruct to activate the delay status report.

In a possible implementation, the fourth message includes the second information, a value of the first field in the fourth message is a seventh value, the seventh value of the first field is used to instruct to deactivate discarding based on protocol data unit set importance, a value of the second field in the fourth message is an eighth value, and the eighth value of the second field is used to instruct to deactivate the delay status report.

In a possible implementation, the obtaining module is configured to:
obtain a fifth message, where the fifth message includes a third logical channel identifier, and the third logical channel identifier is used to instruct to activate discarding based on protocol data unit set importance and instruct to activate the delay status report.

In a possible implementation, the obtaining module is configured to:
obtain a sixth message, where the sixth message includes a fourth logical channel identifier, and the fourth logical channel identifier is used to instruct to deactivate discarding based on protocol data unit set importance and instruct to deactivate the delay status report.

In addition, this application further provides an access network element, including:
a sending module, configured to send first information, where the first information is used to instruct to activate a delay status report; and an obtaining module, configured to obtain the delay status report, where the delay status report includes delay related information; or
a sending module, configured to send second information, where the second information is used to instruct to deactivate the delay status report.

In a possible implementation, the second information is further used to instruct to activate discarding based on protocol data unit set importance.

In a possible implementation, the first information is further used to instruct to deactivate discarding based on protocol data unit set importance.

In a possible implementation, the sending module is configured to:
send a first message of a first type, where the first message includes the first information or the second information;
where the message of the first type includes a first field and a second field, the first field is used to indicate a status of discarding based on protocol data unit set importance, the status includes an activated state or a deactivated state, the second field is used to indicate a status of a delay status report, and the status of the delay status report includes an activated state or a deactivated state.

In a possible implementation, the first message includes the second information, a value of the first field in the first message is a first value, the first value of the first field is used to instruct to activate discarding based on protocol data unit set importance, a value of the second field in the first message is a second value, and the second value of the second field is used to instruct to deactivate the delay status report.

In a possible implementation, the first message includes the first information, a value of the first field in the first message is a third value, the third value of the first field is used to instruct to deactivate discarding based on protocol data unit set importance, a value of the second field in the second message is a fourth value, and the fourth value of the second field is used to instruct to activate the delay status report.

In a possible implementation, the sending module is configured to:
send a second message, where the second message includes a first logical channel identifier, and the first logical channel identifier is used to instruct to activate discarding based on protocol data unit set importance and instruct to deactivate the delay status report.

In a possible implementation, the sending module is configured to:
obtaining a third message, where the third message includes a second logical channel identifier, and the second logical channel identifier is used to instruct to deactivate discarding based on protocol data unit set importance and instruct to activate the delay status report.

In a possible implementation, the second information is further used to instruct to deactivate discarding based on protocol data unit set importance.

In a possible implementation, the first information is further used to instruct to activate discarding based on protocol data unit set importance.

In a possible implementation, the sending module is configured to send a fourth message of a first type, where the fourth message includes the first information or the second information;
where the message of the first type includes a first field and a second field, the first field is used to indicate a status of discarding based on protocol data unit set importance, the status includes an activated state or a deactivated state, the second field is used to indicate a status of a delay status report, and the status of the delay status report includes an activated state or a deactivated state.

In a possible implementation, the fourth message includes the first information, a value of the first field in the fourth message is a fifth value, the fifth value of the first field is used to instruct to activate discarding based on protocol data unit set importance, a value of the second field in the fourth message is a sixth value, and the sixth value of the second field is used to instruct to activate the delay status report.

In a possible implementation, the fourth message includes the second information, a value of the first field in the fourth message is a seventh value, the seventh value of the first field is used to instruct to deactivate discarding based on protocol data unit set importance, a value of the second field in the fourth message is an eighth value, and the eighth value of the second field is used to instruct to deactivate the delay status report.

In a possible implementation, the sending module is configured to:
send a fifth message, where the fifth message includes a third logical channel identifier, and the third logical channel identifier is used to instruct to activate discarding based on protocol data unit set importance and instruct to activate the delay status report.

In a possible implementation, the sending module is configured to:
obtain a sixth message, where the sixth message includes a fourth logical channel identifier, and the fourth logical channel identifier is used to instruct to deactivate discarding based on protocol data unit set importance and instruct to deactivate the delay status report.

In addition, this application further provides a terminal device, including:
an obtaining module, configured to obtain first information, where the first information is used to indicate discarding based on protocol data unit set importance; and
a sending module, configured to send a total data volume corresponding to a protocol data unit set.

In a possible implementation, the obtaining module is further configured to obtain second information, and the sending module is further configured to send a total data volume of a protocol data unit or a service data unit, where the second information is used to instruct to deactivate discarding based on protocol data unit set importance, and a remaining transmission duration corresponding to the protocol data unit is less than the threshold; or
the sending module is further configured to send a total data volume of a protocol data unit or a service data unit when the first information is not obtained, where the remaining transmission duration corresponding to the protocol data unit is less than the threshold.

In a possible implementation, the obtaining module is configured to obtain a first message, where the first message includes a first field, a value of the first field is a first value, and the first value of the first field is used to indicate discarding based on protocol data unit set importance; or
the obtaining module is configured to obtain a second message, where the second message includes a first field and a second field, a value of the first field is a first value, the first value of the first field is used to instruct to activate discarding based on protocol data unit set importance, a value of the second field is a second value, and the second value of the second field is used to instruct to send a total data volume corresponding to a protocol data unit set.

In a possible implementation, the obtaining module is configured to obtain a third message, where the third message includes a logical channel identifier, and the logical channel identifier is used to instruct to activate discarding based on protocol data unit set importance for the protocol data unit set, and to send a total data volume corresponding to the protocol data unit set.

In addition, this application further provides an access network element, including:
a sending module, configured to send first information, where the first information is used to indicate discarding based on protocol data unit set importance; and
an obtaining module, configured to obtain a total data volume corresponding to a protocol data unit set.

In a possible implementation, the sending module is further configured to send second information, and the obtaining module is further configured to obtain a total data volume of a protocol data unit or a service data unit, where the second information is used to instruct to deactivate discarding based on protocol data unit set importance, and a remaining transmission duration corresponding to the protocol data unit is less than the threshold; or
the obtaining module is further configured to obtain a total data volume of a protocol data unit or a service data unit when the first information is not obtained, where the remaining transmission duration corresponding to the protocol data unit is less than the threshold.

In a possible implementation, the sending module is configured to send a first message, where the first message includes a first field, a value of the first field is a first value, and the first value of the first field is used to indicate discarding based on protocol data unit set importance; or
the sending module is configured to send a second message, where the second message includes a first field and a second field, a value of the first field is a first value, the first value of the first field is used to instruct to activate discarding based on protocol data unit set importance, a value of the second field is a second value, and the second value of the second field is used to instruct to send a total data volume corresponding to a protocol data unit set.

In a possible implementation, the sending module is configured to send a third message, where the third message includes a logical channel identifier, and the logical channel identifier is used to instruct to activate discarding based on protocol data unit set importance for the protocol data unit set, and to send a total data volume corresponding to the protocol data unit set.

In addition, this application further provides a terminal device, a method including:
an obtaining module, configured to obtain first information, where the first information is used to instruct to deactivate discarding based on protocol data unit set importance; and the first information is further used to instruct to activate a delay status report or deactivate a delay status report; and
a processing module, configured to process a protocol data unit set according to the first information.

In a possible implementation, the obtaining module is configured to:
obtain a first message, where the first message includes a first field and a second field, a value of the first field is used to instruct to deactivate discarding based on protocol data unit set importance, and a value of the second field is used to instruct to activate the delay status report or deactivate the delay status report.

In a possible implementation, the obtaining module is configured to:
obtain a first message, where the first message includes a logical channel identifier, a value of the logical channel identifier is a first value, the first value of the logical channel identifier is used to instruct to deactivate discarding based on protocol data unit set importance, and the first value of the logical channel identifier is further used to instruct to activate the delay status report or deactivate the delay status report.

In addition, this application further provides an access network element, including:
a sending module, configured to send first information, where the first information is used to instruct to deactivate discarding based on protocol data unit set importance; and the first information is further used to instruct to activate a delay status report or deactivate a delay status report.

In a possible implementation, the sending module is configured to:
send a first message, where the first message includes a first field and a second field, a value of the first field is used to instruct to deactivate discarding based on protocol data unit set importance, and a value of the second field is used to instruct to activate the delay status report or deactivate the delay status report.

In a possible implementation, the sending module is configured to:
send a first message, where the first message includes a logical channel identifier, a value of the logical channel identifier is a first value, the first value of the logical channel identifier is used to instruct to deactivate discarding based on protocol data unit set importance, and the first value of the logical channel identifier is further used to instruct to activate the delay status report or deactivate the delay status report.

In addition, an embodiments of this application further provides an electronic device, applicable to the terminal device or the access network element in the above method embodiments. The electronic device includes a processor and a transceiver, the transceiver is configured to perform data sending and receiving operations, and the processor is configured to perform method steps performed by the terminal device in the foregoing embodiments other than data receiving and sending steps, or perform method steps performed by the access network element in the foregoing embodiments other than data receiving and sending steps.

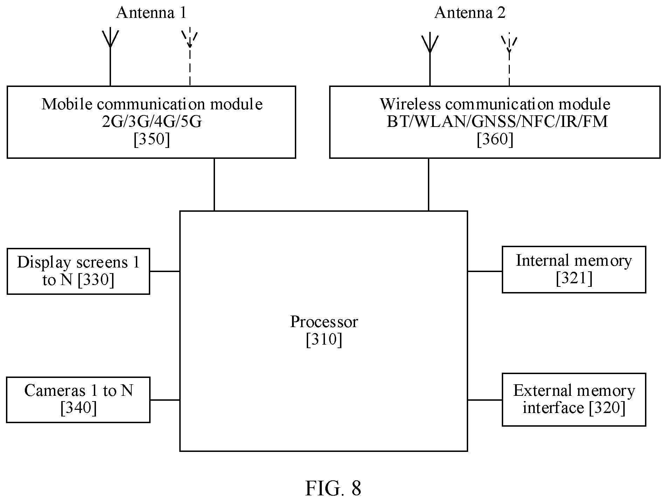

Implementations in which the electronic device is specifically an access network element and a terminal device are further described below with reference to FIG. 7 and FIG. 8.

FIG. 7 is a schematic diagram of a hardware structure of an access network element. The access network element shown in FIG. 7 includes at least one processor 111, at least one memory 112, at least one transceiver 113, at least one network interface 114, and one or more antennas 115. The processor 111, the memory 112, the transceiver 113, and the network interface 114 are connected, for example, by using a bus. In this embodiment of this application, the connection may include various interfaces, transmission lines, buses, or the like. This is not limited in this embodiment. The antenna 115 is connected to the transceiver 113. The network interface 114 is configured to enable the access network element to be connected to another communications device by using a communications link. For example, the network interface 114 may include a network interface such as an S1 interface between the access network element and a network element in a core network, and the network interface may include a network interface such as an X2 or Xn interface between the access network element and another access network element.

The processor 111 shown in FIG. 7 may specifically perform an action processed by an access network element in the foregoing method, the memory 112 may perform a storing action in the foregoing method, the transceiver 113 and the antenna 115 may perform receiving and sending actions on an air interface in the foregoing method, and the network interface 114 may perform an action of interacting with an access network element or another network element in the foregoing method.

The processor in this embodiment of this application, such as the processor 111, may include, but is not limited to, at least one of the following: various computing devices that run software, such as a central processing unit (central processing unit, CPU), a microprocessor, a digital signal processor (DSP), a microcontroller unit (microcontroller unit, MCU), or an artificial intelligence processor. Each computing device may include one or more cores for executing software instructions to perform operations or processing. The processor may be a separate semiconductor chip, or may be integrated into a semiconductor chip with another circuit. For example, the processor may form an SoC (system-on-a-chip) with another circuit (for example, an encoding and decoding circuit, a hardware acceleration circuit, or various buses and interface circuits), or may be integrated into an ASIC as a built-in processor of the ASIC. The ASIC integrated with the processor may be packaged separately or packaged with another circuit. In addition to the core for executing a software instruction to perform an operation or processing, the processor may further include a necessary hardware accelerator, for example, a field programmable gate array (field programmable gate array, FPGA), a PLD (programmable logic device), or a logic circuit for implementing a dedicated logic operation.

The memory in this embodiment of this application may include at least one of the following types: a read-only memory (read-only memory, ROM) or another type of static storage device that can store static information and instructions, a random access memory (random access memory, RAM) or another type of dynamic storage device that can store information and instructions, or an electrically erasable programmable read-only memory (electrically erasable programmabler-only memory, EEPROM). In some scenarios, the memory may be a compact disc read-only memory (compact disc read-only memory, CD-ROM) or another compact disc storage, an optical disc storage (including a compressed optical disc, a laser disc, an optical disc, a digital versatile optical disc, a Blu-ray disc, or the like), a magnetic disk storage medium or another magnetic storage device, or any other medium that can be configured to carry or store expected program code in the form of an instruction or a data structure and that can be accessed by a computer, but is not limited thereto.

The memory 112 may exist independently, and is connected to the processor 111. Optionally, the memory 112 and the processor 111 may be integrated, for example, integrated within one chip. The memory 112 can store program code for performing the technical solution in the embodiments of this application, and is controlled and executed by the processor 111. Various types of executed computer program code may also be considered as drive programs of the processor 111. For example, the processor 111 is configured to execute computer program code stored in the memory 112 to implement the technical solution in the embodiments of this application.

The transceiver 113 may be configured to support receiving or sending of a radio frequency signal between an access network element and another device. The transceiver 113 may be connected to the antenna 115. The transceiver 113 may include a transmitter Tx and a receiver Rx. Specifically, the one or more antennas 115 may receive a radio frequency signal. The receiver Rx of the transceiver 113 is configured to receive the radio frequency signal from the antenna, convert the radio frequency signal into a digital baseband signal or a digital intermediate-frequency signal, and provide the digital baseband signal or the digital intermediate-frequency signal to the processor 111, so that the processor 111 performs further processing on the digital baseband signal or the digital intermediate-frequency signal, for example, demodulation and decoding. In addition, the transmitter Tx of the transceiver 113 is further configured to receive a modulated digital baseband signal or digital intermediate-frequency signal from the processor 111, convert the modulated digital baseband signal or digital intermediate-frequency signal into a radio frequency signal, and send the radio frequency signal by using the one or more antennas 115. Specifically, the receiver Rx may selectively perform one or more stages of down-conversion processing and analog-to-digital conversion processing on the radio frequency signal, to obtain a digital baseband signal or a digital intermediate-frequency signal, and a sequence of the down-conversion processing and the analog-to-digital conversion processing is adjustable. The transmitter Tx may selectively perform one or more stages of up-conversion processing and digital-to-analog conversion processing on the modulated digital baseband signal or digital intermediate-frequency signal, to obtain a radio frequency signal, and a sequence of the up-conversion processing and the digital-to-analog conversion processing is adjustable. The digital baseband signal and the digital intermediate-frequency signal may be collectively referred to as digital signals.

FIG. 8 shows an example of composition of a terminal device according to an embodiment of this application. The terminal device may be, for example, a mobile phone or a smart wearable device (for example, a smartwatch). A mobile phone is used as an example below. The terminal device may include a processor 310, an external memory interface 320, an internal memory 321, a display screen 330, a camera 340, an antenna 1, an antenna 2, a mobile communication module 350, a wireless communication module 360, and the like.

It may be understood that, the structure shown in this embodiment does not constitute specific limitation on the terminal device. In some other embodiments, the terminal device may include more or fewer components than those shown in the figure, or some components may be combined, or some components may be split, or a different component deployment may be used. The components in the figure may be implemented by hardware, software, or a combination of software and hardware.

The processor 310 may include one or more processing units. For example, the processor 310 may include an application processor (application processor, AP), a modem processor, a graphics processing unit (graphics processing unit, GPU), an image signal processor (image signal processor, ISP), a controller, a video codec, a digital signal processor (digital signal processor, DSP), a baseband processor, and/or a neural-network processing unit (neural-network processing unit, NPU). Different processing units may be separate devices, or may be integrated into one or more processors.

It may be understood that an interface connection relationship between the modules shown in this embodiment is merely an example for description, and does not constitute limitation on the structure of the terminal device. In some other embodiments of this application, the terminal device may alternatively use an interface connection manner different from that in the foregoing embodiment, or use a combination of a plurality of interface connection manners.

The external memory interface 320 may be configured to connect to an external memory card such as a micro SD card, to extend a storage capability of the terminal device. The external storage card communicates with the processor 310 through the external storage interface 320, to implement a data storage function. For example, files such as music and videos are stored in the external storage card.

The internal memory 321 may be configured to store computer executable program code, where the executable program code includes an instruction. The processor 310 executes various functional applications and data processing of the terminal device by running the instructions stored in the internal memory 321. The internal memory 321 may include a program storage area and a data storage area. The program storage area may store an operating system, an application required by at least one function (for example, a sound playback function and an image display function), and the like. The data storage region may store data (for example, video stream data) created in a process of using the terminal device, and the like. In addition, the internal memory 321 may include a high-speed random access memory, or may include a nonvolatile memory such as at least one magnetic disk memory, a flash memory, or a universal flash storage (universal flash storage, UFS). The processor 310 executes various function and data processing of the terminal device by running the instructions stored in the internal memory 321 and/or the instructions stored in the memory disposed in the processor.

A wireless communication function of the terminal device may be implemented by using the antenna 1, the antenna 2, the mobile communication module 350, the wireless communication module 360, the modem processor, the baseband processor, and the like.

The antenna 1 and the antenna 2 are configured to transmit and receive an electromagnetic wave signal. Each antenna in the terminal device may be configured to cover one or more communication bands. Different antennas may further be multiplexed to improve utilization of the antennas. For example: the antenna 1 may be multiplexed into a diversity antenna of a wireless local area network. In some other embodiments, the antennas may be used with a tuning switch.

The mobile communication module 350 may provide a solution for wireless communication including 2G/3G/4G/5G applied to the terminal device. The mobile communication module 350 may include at least one filter, a switch, a power amplifier, a low noise amplifier (low noise amplifier, LNA), and the like. The mobile communication module 350 may receive an electromagnetic wave by using the antenna 1, perform processing such as filtering and amplification on the received electromagnetic wave, and send the electromagnetic wave to the modem processor for demodulation. The mobile communication module 350 may further amplify a signal modulated by the modem processor, and convert the signal into an electromagnetic wave by using the antenna 1 for radiation. In some embodiments, at least some functional modules of the mobile communication module 350 may be disposed in the processor 310. In some embodiments, at least some of the functional modules of the mobile communication module 350 may be disposed in a same device as at least some of modules of the processor 310.

In some embodiments, the terminal device initiates or receives a call request by using the mobile communication module 350 and the antenna 1.

In addition, an operating system runs on the foregoing components, for example, an iOS operating system, an Android operating system, or a Windows operating system. An application program may be installed and run in the operating system. A person skilled in the art may clearly understand that, for ease and brevity of description, for explanations and beneficial effects of related content in any one of the terminal devices provided above, refer to the corresponding method embodiments provided above, and details are not described herein again.

In addition, an embodiment of this application further provides a computer-readable storage medium. The computer-readable storage medium stores instructions. When the instructions run on one or more computing devices, the one or more computing devices are caused to perform the communication methods according to the foregoing embodiments.

In addition, an embodiment of this application further provides a computer program product. When the computer program product is executed by the one or more computing devices, the one or more computing devices perform any one of the foregoing communication methods. The computer program product may be a software installation package. When any one of the foregoing communication methods needs to be used, the computer program product may be downloaded and executed on a computer.

Based on the descriptions of the foregoing implementations, a person skilled in the art may clearly understand that this application may be implemented by software in addition to necessary universal hardware, or by dedicated hardware, including a dedicated integrated circuit, a dedicated CPU, a dedicated memory, a dedicated component, and the like. Generally, any functions that can be performed by a computer program can be easily implemented by using corresponding hardware. Moreover, a specific hardware structure used to achieve the same function may be of various forms, for example, in a form of an analog circuit, a digital circuit, or a dedicated circuit. However, as for this application, software program implementation is a better implementation in most cases. Based on such an understanding, the technical solutions of this application essentially, or the part contributing to the prior art may be implemented in the form of a software product. The computer software product is stored in a readable storage medium, such as a floppy disk, a USB flash drive, a removable hard disk, an ROM, an RAM, a magnetic disk, or an optical disc of a computer, and includes several instructions for instructing a computer device (which may be a personal computer, a training device, a network device, or the like) to perform the methods described in the embodiments of this application.

All or some of the above embodiments may be implemented by means of software, hardware, firmware or their combinations. When the software is used for implementation, all or some of the embodiments may be implemented in a form of a computer program product.

The computer program product includes one or more computer instructions. When the computer program instructions are loaded and executed on a computer, all or some of the processes or functions according to embodiments of this application are generated. The computer may be a general-purpose computer, a special-purpose computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, a training device, or a data center to another website, computer, training device, or data center in a wired manner (for example, through a coaxial cable, an optical fiber, or a digital subscriber line (DSL)) or in a wireless manner (for example, through infrared rays, radio, or microwave). The computer-readable storage medium may be any usable medium accessible by the computer, or a data storage device, for example, a training device or a data center, integrating one or more usable media. The usable medium may be a magnetic medium (for example, a floppy disk, a hard disk, or a magnetic tape), an optical medium (for example, a DVD), a semiconductor medium (for example, a solid state disk (Solid State Disk, SSD)), or the like.

The system architecture and the service scenario described in the embodiments of this application are intended to describe the technical solutions in the embodiments of this application more clearly, and do not constitute limitation on the technical solutions provided in the embodiments of this application. A person of ordinary skill in the art may learn that with evolution of a network architecture and emergence of new service scenarios, the technical solutions provided in the embodiments of this application are also applicable to similar technical problems.

## Claims

1. A communication method, applied to a terminal device, comprising:
obtaining first information and sending a delay status report, wherein the first information is used to instruct to activate the delay status report; or
obtaining second information, wherein the second information is used to instruct to deactivate the delay status report.

2. The method according to claim 1, wherein the second information is further used to instruct to activate discarding based on protocol data unit set importance.

3. The method according to claim 1, wherein the first information is further used to instruct to deactivate discarding based on protocol data unit set importance.

4. The method according to any one of claims 1 to 3, further comprising:
obtaining a first message of a first type, wherein the first message comprises the first information or the second information;
wherein the message of the first type comprises a first field and a second field, the first field is used to indicate a status of discarding based on protocol data unit set importance, the status comprises an activated state or a deactivated state, the second field is used to indicate a status of a delay status report, and the status of the delay status report comprises an activated state or a deactivated state.

5. The method according to claim 4, wherein the first message comprises the second information, a value of the first field in the first message is a first value, the first value of the first field is used to instruct to activate discarding based on protocol data unit set importance, a value of the second field in the first message is a second value, and the second value of the second field is used to instruct to deactivate the delay status report.

6. The method according to claim 4, wherein the first message comprises the first information, a value of the first field in the first message is a third value, the third value of the first field is used to instruct to deactivate discarding based on protocol data unit set importance, a value of the second field in the second message is a fourth value, and the fourth value of the second field is used to instruct to activate the delay status report.

7. The method according to claim 2, wherein the obtaining second information comprises:
obtaining a second message, wherein the second message comprises a first logical channel identifier, and the first logical channel identifier is used to instruct to activate discarding based on protocol data unit set importance and instruct to deactivate the delay status report.

8. The method according to claim 2, wherein the obtaining first information comprises:
obtaining a third message, wherein the third message comprises a second logical channel identifier, and the second logical channel identifier is used to instruct to deactivate discarding based on protocol data unit set importance and instruct to activate the delay status report.

9. The method according to claim 1, wherein the second information is further used to instruct to deactivate discarding based on protocol data unit set importance.

10. The method according to claim 1, wherein the first information is further used to instruct to activate discarding based on protocol data unit set importance.

11. The method according to any one of claims 1, 9, and 10, comprising:
obtaining a fourth message of the first type, wherein the fourth message comprises the first information or the second information;
wherein the message of the first type comprises a first field and a second field, the first field is used to indicate a status of discarding based on protocol data unit set importance, the status comprises an activated state or a deactivated state, the second field is used to indicate a status of a delay status report, and the status of the delay status report comprises an activated state or a deactivated state.

12. The method according to claim 11, wherein the fourth message comprises the first information, a value of the first field in the fourth message is a fifth value, the fifth value of the first field is used to instruct to activate discarding based on protocol data unit set importance, a value of the second field in the fourth message is a sixth value, and the sixth value of the second field is used to instruct to activate the delay status report.

13. The method according to claim 11, wherein the fourth message comprises the second information, a value of the first field in the fourth message is a seventh value, the seventh value of the first field is used to instruct to deactivate discarding based on protocol data unit set importance, a value of the second field in the fourth message is an eighth value, and the eighth value of the second field is used to instruct to deactivate the delay status report.

14. The method according to claim 10, wherein the obtaining first information comprises:
obtaining a fifth message, wherein the fifth message comprises a third logical channel identifier, and the third logical channel identifier is used to instruct to activate discarding based on protocol data unit set importance and instruct to activate the delay status report.

15. The method according to claim 10, wherein the obtaining second information comprises:
obtaining a sixth message, wherein the sixth message comprises a fourth logical channel identifier, and the fourth logical channel identifier is used to instruct to deactivate discarding based on protocol data unit set importance and instruct to deactivate the delay status report.

16. A communication method, applied to an access network element, comprising:
sending first information and obtaining a delay status report, wherein the delay status report comprises delay related information, and the first information is used to instruct to activate the delay status report; and
sending second information, wherein the second information is used to instruct to deactivate the delay status report.

17. The method according to claim 16, wherein the second information is further used to instruct to activate discarding based on protocol data unit set importance.

18. The method according to claim 16, wherein the first information is further used to instruct to deactivate discarding based on protocol data unit set importance.

19. The method according to any one of claims 16 to 18, further comprising:
sending a first message of a first type, wherein the first message comprises the first information or the second information;
wherein the message of the first type comprises a first field and a second field, the first field is used to indicate a status of discarding based on protocol data unit set importance, the status comprises an activated state or a deactivated state, the second field is used to indicate a status of a delay status report, and the status of the delay status report comprises an activated state or a deactivated state.

20. The method according to claim 19, wherein the first message comprises the second information, a value of the first field in the first message is a first value, the first value of the first field is used to instruct to activate discarding based on protocol data unit set importance, a value of the second field in the first message is a second value, and the second value of the second field is used to instruct to deactivate the delay status report.

21. The method according to claim 19, wherein the first message comprises the first information, a value of the first field in the first message is a third value, the third value of the first field is used to instruct to deactivate discarding based on protocol data unit set importance, a value of the second field in the second message is a fourth value, and the fourth value of the second field is used to instruct to activate the delay status report.

22. The method according to claim 17, wherein the sending second information comprises:
sending a second message, wherein the second message comprises a first logical channel identifier, and the first logical channel identifier is used to instruct to activate discarding based on protocol data unit set importance and instruct to deactivate the delay status report.

23. The method according to claim 17, wherein the sending first information comprises:
obtaining a third message, wherein the third message comprises a second logical channel identifier, and the second logical channel identifier is used to instruct to deactivate discarding based on protocol data unit set importance and instruct to activate the delay status report.

24. The method according to claim 16, wherein the second information is further used to instruct to deactivate discarding based on protocol data unit set importance.

25. The method according to claim 16, wherein the first information is further used to instruct to activate discarding based on protocol data unit set importance.

26. The method according to any one of claims 16, 24, and 25, comprising:
sending a fourth message of a first type, wherein the fourth message comprises the first information or the second information;
wherein the message of the first type comprises a first field and a second field, the first field is used to indicate a status of discarding based on protocol data unit set importance, the status comprises an activated state or a deactivated state, the second field is used to indicate a status of a delay status report, and the status of the delay status report comprises an activated state or a deactivated state.

27. The method according to claim 26, wherein the fourth message comprises the first information, a value of the first field in the fourth message is a fifth value, the fifth value of the first field is used to instruct to activate discarding based on protocol data unit set importance, a value of the second field in the fourth message is a sixth value, and the sixth value of the second field is used to instruct to activate the delay status report.

28. The method according to claim 26, wherein the fourth message comprises the second information, a value of the first field in the fourth message is a seventh value, the seventh value of the first field is used to instruct to deactivate discarding based on protocol data unit set importance, a value of the second field in the fourth message is an eighth value, and the eighth value of the second field is used to instruct to deactivate the delay status report.

29. The method according to claim 25, wherein the sending first information comprises:
sending a fifth message, wherein the fifth message comprises a third logical channel identifier, and the third logical channel identifier is used to instruct to activate discarding based on protocol data unit set importance and instruct to activate the delay status report.

30. The method according to claim 25, wherein the sending second information comprises:
obtaining a sixth message, wherein the sixth message comprises a fourth logical channel identifier, and the fourth logical channel identifier is used to instruct to deactivate discarding based on protocol data unit set importance and instruct to deactivate the delay status report.

31. A communication method, applied to a terminal device, comprising:
obtaining first information, wherein the first information is used to indicate discarding based on protocol data unit set importance; and
sending a total data volume corresponding to a protocol data unit set.

32. The method according to claim 31, further comprising:
obtaining second information and sending a total data volume of a protocol data unit or a service data unit, wherein the second information is used to instruct to deactivate discarding based on protocol data unit set importance, and a remaining transmission duration corresponding to the protocol data unit is less than the threshold; or
sending a total data volume of a protocol data unit or a service data unit when the first information is not obtained, wherein the remaining transmission duration corresponding to the protocol data unit is less than the threshold.

33. The method according to claim 31 or 32, wherein the obtaining first information comprises:
obtaining a first message, wherein the first message comprises a first field, a value of the first field is a first value, and the first value of the first field is used to indicate discarding based on protocol data unit set importance; or
obtaining a second message, wherein the second message comprises a first field and a second field, a value of the first field is a first value, the first value of the first field is used to instruct to activate discarding based on protocol data unit set importance, a value of the second field is a second value, and the second value of the second field is used to instruct to send a total data volume corresponding to a protocol data unit set.

34. The method according to claim 31 or 32, wherein the obtaining first information comprises:
obtaining a third message, wherein the third message comprises a logical channel identifier, and the logical channel identifier is used to instruct to activate discarding based on protocol data unit set importance for the protocol data unit set, and to send a total data volume corresponding to the protocol data unit set.

35. A communication method, applied to an access network element, comprising:
sending first information, wherein the first information is used to indicate discarding based on protocol data unit set importance; and
obtaining a total data volume corresponding to a protocol data unit set.

36. The method according to claim 35, further comprising:
sending second information and obtaining a total data volume of a protocol data unit or a service data unit, wherein the second information is used to instruct to deactivate discarding based on protocol data unit set importance, and a remaining transmission duration corresponding to the protocol data unit is less than the threshold; or
obtaining a total data volume of a protocol data unit or a service data unit when the first information is not obtained, wherein the remaining transmission duration corresponding to the protocol data unit is less than the threshold.

37. The method according to claim 35 or 36, wherein the sending first information comprises:
sending a first message, wherein the first message comprises a first field, a value of the first field is a first value, and the first value of the first field is used to indicate discarding based on protocol data unit set importance; or
sending a second message, wherein the second message comprises a first field and a second field, a value of the first field is a first value, the first value of the first field is used to instruct to activate discarding based on protocol data unit set importance, a value of the second field is a second value, and the second value of the second field is used to instruct to send a total data volume corresponding to a protocol data unit set.

38. The method according to claim 35 or 36, wherein the sending first information comprises:
sending a third message, wherein the third message comprises a logical channel identifier, and the logical channel identifier is used to instruct to activate discarding based on protocol data unit set importance for the protocol data unit set, and to send a total data volume corresponding to the protocol data unit set.

39. A terminal device, comprising:
a transceiver, configured to perform the receiving operation and the sending operation in the method according to any one of claims 1 to 15 and 31 to 34; and
a processor, configured to perform operations other than the receiving operation and the sending operation in the method according to any one of claims 1 to 15 and 31 to 34.

40. An access network element, comprising:
a transceiver, configured to perform the receiving operation and the sending operation in the method according to any one of claims 16 to 30 and 35 to 38; and
a processor, configured to perform operations other than the receiving operation and the sending operation in method according to any one of claims 16 to 30 and 35 to 38.

41. A communication system, comprising a terminal device and an access network element, wherein the terminal device is configured to perform the method according to any one of claims 1 to 15 and 31 to 34, and the access network element is configured to perform the method according to any one of claims 16 to 30 and 35 to 38.

42. A computer storage medium, configured to store a computer program, wherein the computer program, when being executed, is configured to implement the communication method according to any one of claims 1 to 38.
